(19) Europäisches Patentamt
European Patent Office
Office européen des brevets

(11) **EP 3 832 823 B1**

(12) **EUROPÄISCHE PATENTSCHRIFT**

(45) Veröffentlichungstag und Bekanntmachung des Hinweises auf die Patenterteilung:
**11.10.2023 Patentblatt 2023/41**

(21) Anmeldenummer: **19213864.2**

(22) Anmeldetag: **05.12.2019**

(51) Internationale Patentklassifikation (IPC):
**H02H 3/347** (2006.01)    **H02H 3/04** (2006.01)
**H02H 3/05** (2006.01)    **H02H 3/16** (2006.01)

(52) Gemeinsame Patentklassifikation (CPC):
**H02H 3/347; H02H 3/042; H02H 3/05;** H02H 3/16

(54) **VERFAHREN UND EINRICHTUNGEN ZUM ERZEUGEN EINER ERDSCHLUSSBEZOGENEN INFORMATION**

METHOD AND DEVICES FOR GENERATING SOIL RELATED INFORMATION

PROCÉDÉ ET DISPOSITIFS DE GÉNÉRATION DES INFORMATIONS RELATIVES AU DÉFAUT À LA TERRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.06.2021 Patentblatt 2021/23**

(73) Patentinhaber: **Siemens Aktiengesellschaft**
**80333 München (DE)**

(72) Erfinder:
• **Döring, Ludwig**
**64285 Darmstadt (DE)**

• **Braun, Benjamin**
**64289 Darmstadt (DE)**
• **Hanson, Jutta**
**64625 Bensheim (DE)**

(74) Vertreter: **Siemens Patent Attorneys**
**Postfach 22 16 34**
**80506 München (DE)**

(56) Entgegenhaltungen:
**EP-A1- 2 756 571      DE-A1- 19 901 789**
**US-A1- 2012 123 708**

**Beschreibung**

Die Erfindung bezieht sich auf Verfahren und Einrichtungen zum Erzeugen erdschlussbezogener Informationen.

Aus EP 2 756 571 ist ein Verfahren zum Erkennen eines Erdfehlers bekannt, wobei zur Erkennung einer Richtung, in der der Erdfehler von der Messstelle aus gesehen aufgetreten ist, für eine vorgegebene Betrachtungszeitdauer ab dem Startzeitpunkt eine Nullsystemwirkenergie ermittelt und mit einem Wirkenergie-Schwellenwert verglichen wird, ein in Vorwärtsrichtung auf dem überwachten Abschnitt liegender Erdfehler dann erkannt wird, wenn die ermittelte Nullsystemwirkenergie den negativen Wirkenergie-Schwellenwert unterschreitet, und ein in Rückwärtsrichtung außerhalb des überwachten Abschnitts liegender Erdfehler dann erkannt wird, wenn die ermittelte Nullsystemwirkenergie den positiven Wirkenergie-Schwellenwert überschreitet.

Der Erfindung liegt die Aufgabe zugrunde, ein Verfahren zum Erzeugen einer erdschlussbezogenen Information anzugeben, das besonders verlässliche Ergebnisse liefert.

Die Aufgabe wird erfindungsgemäß unter anderem mit einem Verfahren nach Anspruch 1 gelöst. Vorteilhafte Ausgestaltungen des Verfahrens sind in Unteransprüchen angegeben.

Danach ist erfindungsgemäß vorgesehen, dass bei Vorliegen einer den Eintrittszeitpunkt eines Erdschlusses angebenden Zeitpunktangabe die Wirkenergie im Nullsystem ab diesem Eintrittszeitpunkt für eine vorgegebene Zeitspanne unter Bildung von Wirkenergiewerten beobachtet wird, die Wirkenergiewerte normiert werden, die normierten Wirkenergiewerte mit zumindest einem Schwellenwertpaar verglichen werden, das einen oberen Schwellenwert und einen unteren Schwellenwert umfasst, auf einen Erdschluss an einer Fehlerstelle, die - von der Anschlussstelle aus gesehen - in einer vorgegebenen Richtung liegt, geschlossen wird, wenn die normierten Wirkenergiewerte nach Ablauf der vorgegebenen Zeitspanne den unteren Schwellenwert unterschritten haben, und auf einen Erdschluss an einer Fehlerstelle, die von der Anschlussstelle aus gesehen in einer zu der vorgegebenen Richtung entgegengesetzten Richtung liegt, geschlossen wird, wenn die normierten Wirkenergiewerte nach Ablauf der vorgegebenen Zeitspanne den oberen Schwellenwert überschritten haben.

Ein wesentlicher Vorteil des erfindungsgemäßen Verfahrens besteht darin, dass auf der Basis der Wirkenergiewerte besonders verlässliche Angaben zur Fehlerrichtung erzielt werden können.

Als vorteilhaft wird es angesehen, wenn auf die Lage der Fehlerstelle nur geschlossen wird, sofern kein Fehlersignal vorliegt, das anzeigt, dass die Richtung der Fehlerstelle - von der Anschlussstelle aus gesehen - nicht festgestellt werden kann.

Als vorteilhaft wird es angesehen, wenn ein Fehlersignal erzeugt wird, das anzeigt, dass die Richtung der Fehlerstelle - von der Anschlussstelle aus gesehen - nicht festgestellt werden kann, wenn die normierten Wirkenergiewerte nach Ablauf der vorgegebenen Zeitspanne zwischen dem oberen und unteren Schwellenwert liegen.

Als vorteilhaft wird es angesehen, wenn ein Fehlersignal erzeugt wird, das anzeigt, dass die Richtung der Fehlerstelle - von der Anschlussstelle aus gesehen - nicht festgestellt werden kann, wenn die normierten Wirkenergiewerte innerhalb der vorgegebenen Zeitspanne sowohl den oberen Schwellenwert überschritten als auch den unteren Schwellenwert unterschritten haben.

Als vorteilhaft wird es angesehen, wenn die normierten Wirkenergiewerte mit zumindest einem Hilfsschwellenwertpaar verglichen werden, das durch einen oberen Hilfsschwellenwert und einen unteren Hilfsschwellenwert gebildet wird, und ein Richtungsumkehrsignal erzeugt wird, das anzeigt, dass die Wirkenergie im Zeitraum zwischen dem Eintrittszeitpunkt und dem Ablauf der vorgegebenen Zeitspanne die Richtung geändert hat, wenn die normierten Wirkenergiewerte innerhalb der vorgegebenen Zeitspanne sowohl den oberen Hilfsschwellenwert über- und unterschritten als auch den unteren Hilfsschwellenwert über- und unterschritten haben.

Als vorteilhaft wird es angesehen, wenn das Richtungsumkehrsignal ein Fehlersignal bildet, das anzeigt, dass die Richtung der Fehlerstelle - von der Anschlussstelle aus gesehen - nicht festgestellt werden kann.

Erfindungsgemäß wird von den ab dem Eintrittszeitpunkt bis zum Ende der vorgegebenen Zeitspanne erzeugten Wirkenergiewerten der betragsmäßig größte Wirkenergiewert ermittelt und die Wirkenergiewerte werden durch Division durch den Betrag dieses größten Wirkenergiewerts normiert.

Als vorteilhaft wird es angesehen, wenn der obere Schwellenwert und der untere Schwellenwert betragsmäßig gleich groß sind, aber unterschiedliche Vorzeichen aufweisen.

Als vorteilhaft wird es angesehen, wenn der obere Schwellenwert und der untere Schwellenwert betragsmäßig zwischen 0,7 und 0,9 liegen.

Als vorteilhaft wird es angesehen, wenn der obere Hilfsschwellenwert und der untere Hilfsschwellenwert betragsmäßig gleich groß sind, aber unterschiedliche Vorzeichen aufweisen. Als vorteilhaft wird es angesehen, wenn der obere Hilfsschwellenwert und der untere Hilfsschwellenwert betragsmäßig zwischen 0,05 und 0,25 liegen.

Als vorteilhaft wird es angesehen, wenn die vorgegebene Zeitdauer zwischen 0,5 und 2 Netzperioden, vorzugsweise eine Netzperiode, der an der Anschlussleitung anliegenden Netzfrequenz beträgt.

Als vorteilhaft wird es angesehen, wenn auf das Vorliegen eines Erdschlusses geschlossen wird und der Eintrittszeitpunkt des Erdschlusses bestimmt wird, wenn zumindest die Mitsystemspannung zumindest eine vorgege-

bene Mitsystemauslösebedingung erfüllt und/oder die Nullsystemspannung zumindest eine vorgegebene Nullsystemauslösebedingung erfüllt.

Als vorteilhaft wird es angesehen, wenn auf das Vorliegen eines Erdschlusses geschlossen wird und der Eintrittszeitpunkt des Erdschlusses bestimmt wird, wenn sowohl die Nullsystemspannung zumindest eine vorgegebene Nullsystemauslösebedingung erfüllt als auch die Mitsystemspannung zumindest eine vorgegebene Mitsystemauslö-sebedingung erfüllt.

Als vorteilhaft wird es angesehen, wenn die Nullsystemspannung beobachtet wird, und zumindest vorläufig auf das Vorliegen eines Erdschlusses geschlossen wird, wenn die Nullsystemspannung betragsmäßig zumindest einen vorgegebenen Schwellenwert überschreitet, und der Zeitpunkt eines solchen Überschreitens als vorläufiger Eintrittszeitpunkt des Erdschlusses unter Bildung einer vorläufigen Eintrittszeitpunktangabe angesehen wird.

Als vorteilhaft wird es angesehen, wenn zumindest vorläufig auf das Vorliegen eines Erdschlusses geschlossen wird, wenn die Nullsystemspannung betragsmäßig zumindest einen vorgegebenen ersten Schwellenwert als auch einen vorgegebenen zweiten Schwellenwert überschreitet, und der Zeitpunkt eines solchen Überschreitens beider Schwellenwerte als vorläufiger Eintrittszeitpunkt des Erdschlusses unter Bildung einer vorläufigen Eintrittszeitpunktangabe angesehen wird.

Als vorteilhaft wird es angesehen, wenn der erste Schwellenwert proportional zur Nennspannung der an der Anschlussleitung anliegenden Spannung bzw. zur Netzspannung des an die Anschlussleitung angeschlossenen Netzes ist und der zweite Schwellenwert proportional zu einem Effektivwert der Nullsystemspannung ist, der über mindestens eine vor dem vorläufigen Eintrittszeitpunkt liegende Netzperiode errechnet worden ist.

Als vorteilhaft wird es angesehen, wenn bei Vorliegen einer vorläufigen Eintrittszeitpunktangabe die Mitsystemspannung für einen Vergleichszeitpunkt ermittelt wird, der gegenüber dem vorläufigen Eintrittszeitpunkt um eine vorgegebene Verzögerungszeitspanne verzögert ist, geprüft wird, ob die Mitsystemspannung für den Vergleichszeitpunkt innerhalb eines vorgegebenen Mitsystemspannungsbands liegt oder nicht, und die oder zumindest eine der vorgege-benen Mitsystemauslösebedingungen als erfüllt angesehen wird, wenn die Mitsystemspannung für den Vergleichszeitpunkt innerhalb des vorgegebenen Mitsystemspannungsbands liegt.

Als vorteilhaft wird es angesehen, wenn das vorgegebene Mitsystemspannungsband in Abhängigkeit von einem im fehlerfreien Fall vorliegenden Mitsystemspannungswert ermittelt wird.

Als vorteilhaft wird es angesehen, wenn bei Vorliegen einer vorläufigen Eintrittszeitpunktangabe für eine Vergleichszeitspanne geprüft wird, ob die Amplitude der Grundschwingung der Nullsystemspannung zumindest eine amplitudenbezogene Bedingung erfüllt und/oder die Dämpfung der Grundschwingung zumindest eine vorgegebene dämpfungsbezogene Bedingung erfüllt und zumindest auch in Abhängigkeit von diesen Prüfergebnissen auf das Vorliegen eines Erdschlusses geschlossen wird.

Als vorteilhaft wird es angesehen, wenn bei Vorliegen einer vorläufigen Eintrittszeitpunktangabe für eine Vergleichszeitspanne geprüft wird, ob die Amplitude der Grundschwingung der Nullsystemspannung einen ersten Amplitudenschwellenwert überschreitet und einen ersten Dämpfungsschwellenwert unterschreitet, und auf das Vorliegen eines Erdschlusses geschlossen wird, wenn beide Bedingungen erfüllt sind, und andernfalls geprüft wird, ob die Amplitude der Grundschwingung der Nullsystemspannung einen zweiten Amplitudenschwellenwert, der kleiner als der erste Amplitudenschwellenwert ist, überschreitet und einen zweiten Dämpfungsschwellenwert, der kleiner als der erste Dämpfungsschwellenwert ist, unterschreitet, und auf das Vorliegen eines Erdschlusses geschlossen wird, wenn die beiden letztgenannten Bedingungen erfüllt sind.

Als vorteilhaft wird es angesehen, wenn der zweite Amplitudenschwellenwert mindestens 5-mal kleiner als der erste Amplitudenschwellenwert ist und/oder der erste Dämpfungsschwellenwert positiv und der zweite Dämpfungsschwellenwert negativ ist.

Als vorteilhaft wird es angesehen, wenn bei Vorliegen einer vorläufigen Eintrittszeitpunktangabe für eine Vergleichszeitspanne geprüft wird, ob die Nullsystemspannung innerhalb der Vergleichszeitspanne über ein vorgegebenes Maß hinaus von der geschätzten Nullsystemspannung abweicht und zumindest auch in Abhängigkeit von diesem Prüfergebnis auf das Vorliegen eines Erdschlusses geschlossen wird.

Als vorteilhaft wird es angesehen, wenn auf das Vorliegen eines Erdschlusses geschlossen und die den Eintrittszeitpunkt des Erdschlusses angebende Zeitpunktangabe erzeugt wird, indem

- im Rahmen eines ersten Teilschritts zumindest auch geprüft wird, ob die Nullsystemspannung zumindest eine vorgegebene Nullsystemauslösebedingung erfüllt, und bei Erfüllung der Prüfbedingungen des ersten Teilschritts der jeweilige Zeitpunkt der Erfüllung als vorläufiger Eintrittszeitpunkt des Erdschlusses unter Bildung einer vorläufigen Eintrittszeitpunktangabe angesehen wird,
- bei Vorliegen der vorläufigen Eintrittszeitpunktangabe im Rahmen eines zweiten Teilschritts zumindest auch geprüft wird, ob die Mitsystemspannung eine von der Eintrittszeitpunktangabe abhängige Mitsystemauslösebedingung erfüllt,
- bei Erfüllung der Prüfbedingungen des zweiten Teilschritts im Rahmen eines dritten Teilschritts geprüft wird, ob die Nullsystemspannung eine oder mehrere von der Eintrittszeitpunktangabe abhängige Nullsystemauslösebedingungen erfüllt, und

- bei Erfüllung der Prüfbedingungen des dritten Teilschritts die vorläufige Eintrittszeitpunktangabe als bestätigt angesehen und weiterverarbeitet wird.

Als vorteilhaft wird es angesehen, wenn die Ermittlung der den Eintrittszeitpunkt des Erdschlusses angebenden Zeitpunktangabe und/oder der den vorläufigen Eintrittszeitpunkt des Erdschlusses angebenden vorläufigen Eintrittszeitpunktangabe die nachfolgenden Schritte zumindest auch umfasst, wonach

- der Betrag der Nullsystemspannung, insbesondere der Betrag des Nullsystemspannungszeigers, überwacht wird und geprüft wird, ob der Betrag der Nullsystemspannung zum jeweiligen Betrachtungszeitpunkt bezogen auf einen früheren Referenzzeitpunkt über ein vorgegebenes Maß hinaus angestiegen ist,
- im Falle eines Anstiegs über das vorgegebene Maß hinaus auf einen Erdschluss in dem Zeitintervall zwischen dem Referenzzeitpunkt und dem Betrachtungszeitpunkt geschlossen wird,
- in dem Zeitintervall Maxima des Betrags der Nullsystemspannung ermittelt werden,
- in dem Zeitintervall ausgehend vom globalen Maximum unter Einbezug eines oder mehrerer relativer Maxima ein durch zwei benachbarte Maxima gebildetes Maximapaar gesucht wird, das zumindest eine vorgegebene Maximabedingung erfüllt, und in Abhängigkeit vom Suchergebnis ein innerhalb des Zeitintervalls liegendes Teilintervall festgelegt wird,
- für das Teilintervall der Verlauf der Nullsystemspannung unter Heranziehung der zu Beginn des Teilintervalls gemessenen Nullsystemspannung geschätzt wird und
- als Eintrittszeitpunkt des Erdschlusses derjenige Zeitpunkt festgelegt wird, zu dem der gemessene Verlauf der Nullsystemspannung von dem geschätzten Verlauf der Nullsystemspannung über ein vorgegebenes Maß hinaus abweicht.

Die Erfindung bezieht sich außerdem auf eine Einrichtung, insbesondere Schutzgerät, zum Erzeugen mindestens einer erdschlussbezogenen Information. Erfindungsgemäß ist bezüglich einer solchen Einrichtung vorgesehen, dass die Einrichtung derart ausgestaltet ist, dass sie im Betrieb zumindest eines der oben beschriebenen Verfahren ausführt.

Die Einrichtung wird vorzugsweise an einer Anschlussstelle an eine elektrische Leitung angeschlossen.

Die Einrichtung weist vorzugsweise eine Recheneinrichtung und einen Speicher auf. In dem Speicher ist vorzugsweise ein Steuerprogrammmodul abgespeichert, das bei Ausführung durch die Recheneinrichtung eines oder mehrere der oben beschriebenen Verfahren durchführt.

Falls die Richtung der Fehlerstelle - von der Anschlussstelle des Schutzgeräts aus gesehen - nicht festgestellt werden kann, wird vorzugsweise ein Fehlersignal erzeugt, beispielsweise in Form eines Richtungsentscheids "Unbekannt".

Die Erfindung wird nachfolgend anhand von Ausführungsbeispielen näher erläutert; dabei zeigen beispielhaft

Fig. 1-11    ein Ausführungsbeispiel für ein erfindungsgemäßes Verfahren, das drei Teile umfasst, von denen sich ein erster Teil auf ein Ausführungsbeispiel für ein erfindungsgemäßes Verfahren zur Bestimmung eines Erdschlusseintrittszeitpunkts bezieht,

Fig. 12-21   eine Ausführungsvariante des ersten Teils des Verfahrens gemäß den Figuren 1 bis 11, wobei sich die Ausführungsvariante auf ein weiteres Ausführungsbeispiel für ein erfindungsgemäßes Verfahren zur Bestimmung eines Erdschlusseintrittszeitpunkts bezieht, und

Fig. 22     ein Ausführungsbeispiel für ein Schutzgerät, das das Verfahren gemäß den Figuren 1-11 und/oder das Verfahren gemäß den Figuren 12 bis 21 ausführen kann.

In den Figuren werden für identische oder vergleichbare Komponenten stets dieselben Bezugszeichen verwendet.

Im Zusammenhang mit den Erläuterungen zu den nachfolgenden Ausführungsbeispielen werden konkrete Zahlenwerte genannt; diese Zahlenwerte sind lediglich als Zahlenbeispiele zu verstehen; die Ausführungsbeispiele können auch mit anderen Zahlenwerten durchgeführt werden.

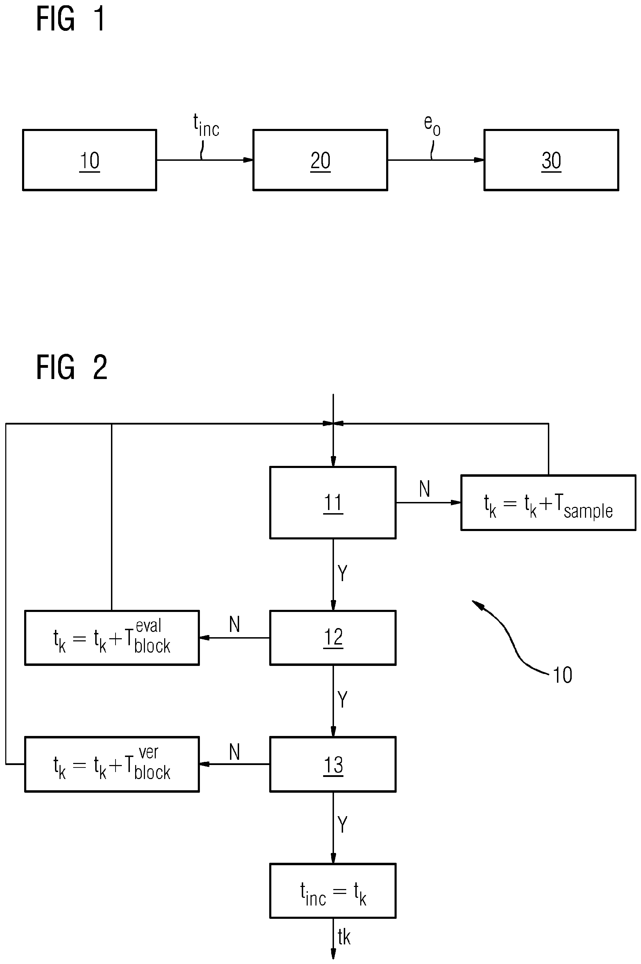

Die Figur 1 zeigt ein Blockschaltbild für ein Ausführungsbeispiel der Erfindung, bei dem eine gerichtete Erdschlusserkennung drei Teile 10, 20 und 30 umfasst.

Im ersten Teil 10 - nachfolgend auch "Anregung" genannt - erfolgt die Bestimmung des Erdschlusseintrittszeitpunkts $t_{inc}$. Ab dem Zeitpunkt des ermittelten Erdschlusseintrittszeitpunkts $t_{inc}$ erfolgt im zweiten Teil 20 - nachfolgend auch "Berechnung" genannt - die Bestimmung der relativen Wirkenergie $e_0$. Diese Größe wird anschließend im dritten Teil 30 - nachfolgend auch "Bewertung" genannt - ausgewertet. Alle drei Teile 10, 20 und 30 werden in den folgenden Abschnitten kurz beschrieben.

Anregung 10:

Der Erdschlusseintritt im Netz mit isoliertem Sternpunkt und im Netz mit Erdschlusskompensation muss von weiteren Ereignissen, welche sich auf die Nullsystemspannung $u_o$ auswirken, unterschieden werden. Bei den transienten Ereignissen, die durch Fehler entstehen, wird zwischen einem Erdschluss, einem Kurzschluss und einem kurzzeitigen Lichtbogen unterschieden. Bei den transienten Ereignissen, die durch Schaltvorgänge entstehen, werden nur Schaltvorgänge von Leitungen betrachtet. Diese werden danach unterschieden, ob ein Schaltvorgang an der eigenen Leitung oder an einer anderen Leitung stattfindet.

Ein beispielhaftes Verfahren zur Bestimmung des Eintrittszeitpunkts eines einphasigen Erdfehlers im Rahmen der Anregung 10 ist in der Figur 2 gezeigt. Das Verfahren umfasst einen ersten Algorithmus 11, einen zweiten Algorithmus 12 und einen dritten Algorithmus 13.

Der erste Algorithmus 11 überprüft, ob zum Abtastzeitpunkt $t_k$ ein transientes Ereignis in der Nullsystemspannung $u_0$ vorliegt. Ist dies der Fall, bewertet der zweite Algorithmus 12, ob es sich bei dem transienten Ereignis um einen Erdschluss handeln kann oder ob das transiente Ereignis von einem Kurzschluss bzw. von einem Schaltvorgang an der eigenen Leitung verursacht wird. Der dritte Algorithmus 13 bewertet abschließend, ob es sich bei dem transienten Ereignis tatsächlich um einen Erdschluss handelt oder ob ein kurzzeitiger Lichtbogen bzw. ein Schaltvorgang an einer anderen Leitung vorliegt. Die drei Algorithmen 11, 12 und 13 werden in den folgenden Abschnitten kurz vorgestellt.

Erster Algorithmus 11:

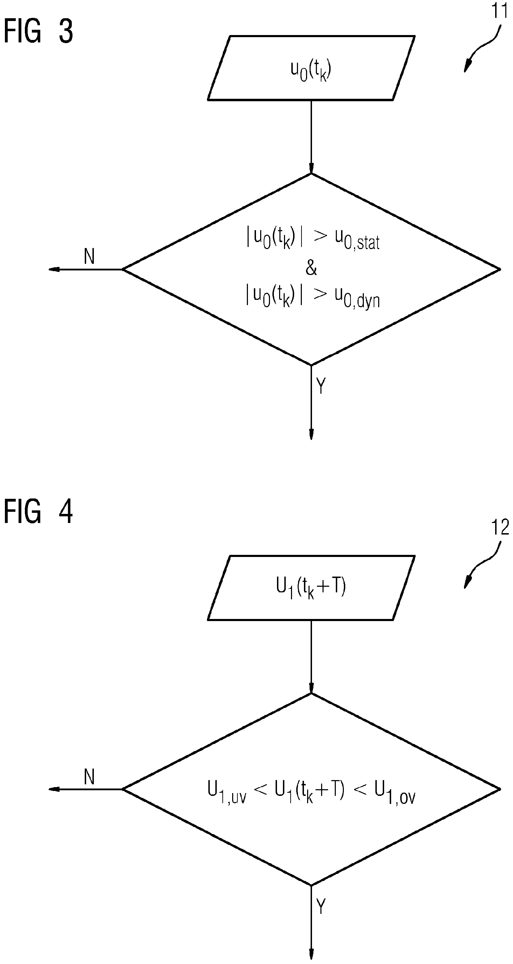

Die Aufgabe des ersten Algorithmus 11 ist zu bewerten, ob zum Abtastzeitpunkt $t_k$ ein transientes Ereignis in der Nullsystemspannung $u_0$ vorliegt. Ein beispielhaftes Flussdiagramm für den ersten Algorithmus 11 ist in der Figur 3 zu sehen.

Der Betrag des Momentanwerts $u_0(t_k)$ der Nullsystemspannung wird mit einem stationären Schwellenwert $u_{0\,stat}$ und mit einem dynamischen Schwellenwert $u_{0\,dyn}$ verglichen.

Der stationäre Schwellenwert $u_{0\,stat}$ bildet die untere Grenze der Nullsystemspannung $u_0$ für die Erkennung von transienten Ereignissen. Er verhindert eine zu große Empfindlichkeit des dynamischen Schwellenwerts $u_{0\,dyn}$ für geringe stationäre Nullsystemspannungen $u_0$. Der stationäre Schwellenwert $u_{0\,stat}$ wird nach der folgenden Gleichung als Anteil $\mu_{0\,stat}$ der Amplitude der Leiter-Erde-Spannung $U_n/\sqrt{3}$ berechnet, beispielsweise gemäß :

$$u_{0\,stat} = \mu_{0\,stat} \cdot \sqrt{2} \cdot \frac{U_n}{\sqrt{3}} = 0{,}025 \cdot \sqrt{2} \cdot \frac{100\,V}{\sqrt{3}}$$

Der dynamische Schwellenwert $u_{0\,dyn}$ beträgt nach der folgenden Gleichung das Vielfache $\mu_{0\,dyn}$ des als Amplitude umgerechneten Effektivwerts $U_0$ der Nullsystemspannung zum Abtastzeitpunkt $t_k$ :

$$u_{0\,dyn} = \mu_{0\,dyn} \cdot \sqrt{2} \cdot U_0(t_k) = 1{,}1 \cdot \sqrt{2} \cdot U_0(t_k)$$

Überschreitet der Betrag des Momentanwerts $u_0(t_k)$ beide Schwellenwerte (siehe Pfad Y), liegt ein transientes Ereignis in der Nullsystemspannung $u_0$ vor. Ist dies nicht der Fall (siehe Pfad N), wird der erste Algorithmus 11 für den nächsten Abtastwert $t_k = t_k + T_{sample}$ durchgeführt.

Zweiter Algorithmus 12:

Die Aufgabe des zweiten Algorithmus 12 ist zu bewerten, ob es sich bei dem transienten Ereignis zum Abtast-zeitpunkt $t_k$ um einen Erdschluss handeln kann. Das zugehörige Flussdiagramm ist in der Figur 4 gezeigt. Untersuchungen in elektrischen Energienetzen mit Erdschlusskompensation haben gezeigt, dass sich die Mitsystemspannung $U_1$ während eines Erdschlusses praktisch nicht ändert. Der zusätzliche Spannungsfall, der im Mitsystem an Netzimpedanz und Transformator durch den Erdschlussstrom entsteht, ist vernachlässigbar gering.

Im Falle eines Kurzschlusses (zweipoliger Kurzschluss ohne Erdberührung, zweipoliger Kurzschluss mit Erdberührung, dreipoliger Kurzschluss) erzeugt der Kurzschlussstrom einen relevanten zusätzlichen Spannungsfall im Mitsystem an Netzimpedanz und Transformator und führt somit zu einer Verringerung der Mitsystemspannung $U_1$ während des Kurzschlusses. Weiterhin fällt die Mitsystemspannung durch den Abschaltvorgang der eigenen Leitung in einem kurzen Zeitraum praktisch auf null ab.

Ändert sich die Mitsystemspannung $U_1$ eine Netzperiode $T$ nach dem transienten Ereignis maßgeblich, kann es sich beim transienten Ereignis folglich nicht um einen Erdschluss handeln, vielmehr liegt ein Kurzschluss oder ein Schaltvorgang an der eigenen Leitung vor.

Der zweite Algorithmus 12 prüft daher, ob die Mitsystemspannung $U_1$ eine Netzperiode $T$ nach dem Abtastzeitpunkt $t_k$ innerhalb eines Toleranzbands um die Mitsystemspannung $U_{1\,op}$ im fehlerfreien Betrieb liegt. Die untere Grenze $U_{1\,uv}$ und die obere Grenze $U_{1\,ov}$ des Toleranzbands werden vorzugsweise nach der folgenden Gleichung in Abhängigkeit der Mitsystemspannung $U_{1\,op}$ bestimmt:

$$U_{1\,uv} = \mu_{1\,uv} \cdot U_{1\,uv} = 0,97 \cdot U_{1\,op}$$

$$U_{1\,ov} = \mu_{1\,ov} \cdot U_{1\,ov} = 1,03 \cdot U_{1\,op}$$

Die Mitsystemspannung $U_{1\,op}$ im fehlerfreien Betrieb muss im zeitlichen Abstand $T_{op}$ aktualisiert werden. Der zeitliche Abstand $T_{op}$ kann im Bereich einiger Sekunden gewählt werden. Eine Aktualisierung der Mitsystemspannung $U_{1\,op}$ während eines transienten Ereignisses sollte blockiert werden.

Falls die Mitsystemspannung $U_1(t_k + T)$ außerhalb des Toleranzbands liegt, wird die Erdschlusserkennung vorzugsweise für die Dauer $T_{block}^{eval} = 300\,ms$ blockiert und anschließend wieder der erste Algorithmus 11 gestartet. Die Blockierung der Erdschlusserkennung verhindert, dass bei der Rückkehr der Mitsystemspannung $U_1$ in das Toleranzband fälschlicher Weise ein Erdschluss aufgrund der weiterhin vorhandenen Nullsystemspannung $u_0$ erkannt wird.

Dritter Algorithmus 13:

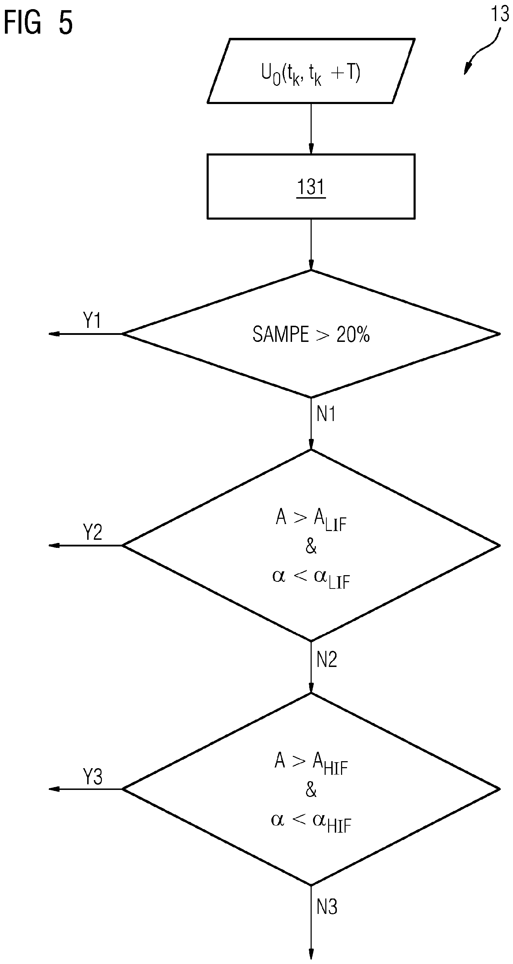

Die Aufgabe des dritten Algorithmus 13 ist zu bewerten, ob es sich bei dem transienten Ereignis zum Abtastzeitpunkt $t_k$ um einen Erdschluss handelt. Das Flussdiagramm des dritten Algorithmus 13 ist in der Figur 5 dargestellt. Zunächst erfolgt beispielsweise mit Hilfe des bekannten ESPRIT-Algorithmus 131 eine Schätzung der Parameter Dämpfung $\alpha$, Amplitude $A$, Frequenz $f$ und Anfangsphasenwinkel $\varphi$ der Grundschwingung der Nullsystemspannung $u_0$ für den Zeitraum einer Netzperiode $T$ nach dem Abtastzeitpunkt $t_k$.

Als Fehlermaß für die Beurteilung der Schätzung wird vorzugsweise der symmetrische mittlere betragsmäßige prozentuale Fehler für die Nullsystemspannung $u_0$ nach der folgenden Gleichung berechnet:

$$SMAPE = \frac{100\,\%}{N} \cdot \sum_{n=1}^{N} \frac{|\hat{u}_0(t_n) - u_0(t_n)|}{|\hat{u}_0(t_n)| + |u_0(t_n)|}$$

Dieser bietet im Vergleich zu anderen Fehlermaßen den Vorteil, dass er nur Werte zwischen 0 und 100 % annimmt, was dessen Interpretation maßgeblich vereinfacht. Falls das Fehlermaß SMAPE größer als 20 % ist, wird die Schätzung des ESPRIT-Algorithmus 131 verworfen und der dritte Algorithmus 13 abgebrochen (siehe Pfad Y1).

Eine Ursache für ein zu großes Fehlermaß SMAPE kann darin liegen, dass unmittelbar in den ersten Millisekunden nach dem initialen transienten Ereignis zum Abtastzeitpunkt $t_k$ ein weiteres transientes Ereignis auftritt. In diesem Fall kann der ESPRIT-Algorithmus 131 keine verlässliche Schätzung der Parameter der Grundschwingung der Nullsystemspannung $u_0$ des initialen transienten Ereignisses liefern.

Ist die Anforderung an die Genauigkeit der Schätzung der Nullsystemspannung $u_0$ erfüllt (siehe Pfad N1), wird überprüft, ob es sich bei dem transienten Ereignis um einen Erdschluss mit geringem Fehlerübergangswiderstand (Low Impedance Fault - LIF) oder um einen Erdschluss mit großem Fehlerübergangswiderstand (High Impedance Fault - HIF) handelt. Es werden dazu jeweils die Amplitude $A$ und die Dämpfung $\alpha$ der Grundschwingung der Nullsystemspannung $u_0$ mit den entsprechenden Schwellenwerten $A_{LIF}$ und $\alpha_{LIF}$ bzw. $A_{HIF}$ und $\alpha_{HIF}$ verglichen.

Für einen Erdschluss mit geringem Fehlerübergangswiderstand weist die Grundschwingung der Nullsystemspannung $u_0$ eine große Amplitude $A$ auf (siehe Pfad Y2). Für einen Erdschluss mit großem Fehlerübergangswiderstand (siehe Pfad Y3) ist die Amplitude $A$ der Grundschwingung der Nullsystemspannung $u_0$ gering. Die Grundschwingung

der Nullsystemspannung $u_0$ weist aber eine negative Dämpfung $\alpha$ auf. Beispielhafte Schwellenwerte für einen Erdschluss mit geringem Fehlerübergangswiderstand und für einen Erdschluss mit großem Fehlerübergangswiderstand sind in den folgenden Gleichungen gegeben.

$$A_{LIF} = \mu_{LIF} \cdot \sqrt{2} \cdot \frac{U_n}{\sqrt{3}} = 0{,}15 \cdot \sqrt{2} \cdot \frac{100\,V}{\sqrt{3}}$$

$$\alpha_{LIF} = 275\,\frac{1}{s}$$

$$A_{HIF} = \mu_{HIF} \cdot \sqrt{2} \cdot \frac{U_n}{\sqrt{3}} = 0{,}025 \cdot \sqrt{2} \cdot \frac{100\,V}{\sqrt{3}}$$

$$\alpha_{HIF} = -15\,\frac{1}{s}$$

Falls es sich bei dem transienten Ereignis nicht um einen Erdschluss handelt oder keine zuverlässige Schätzung des ESPRIT-Algorithmus erfolgen kann, wird die Erdschlusserkennung vorzugsweise für die Dauer $T_{block}^{ver} = 5\,ms$ blockiert und anschließend der erste Algorithmus 11 gestartet (siehe Pfade Y1 und N3).

Berechnung 20:

Untersuchungen haben gezeigt, dass die Wirkenergie $E_0$ von einer Vielzahl von Einflussfaktoren abhängt. Die Einflussfaktoren können entsprechend der beiden folgenden Tabellen danach kategorisiert werden, ob sie vom Aufbau und der Betriebsweise des Netzes oder von den Eigenschaften des auftretenden Erdschlusses abhängen.

| Kapazitive Netzgröße $I_{CE}$ | ++ |
|---|---|
| Längsunsymmetrie | ++ |
| Querunsymmetrie | + |
| Topologie | +++ |
| Verstimmung $v$ | + |

| Erdschlussdauer $t_F$ | ++ |
|---|---|
| Erdschlussort $l_F$ | + |
| Fehlerübergangswiderstand $R_F$ | +++ |
| Spannung bei Erdschlusseintritt | + |

Die Topologie des Netzes (radiale Leitungen bzw. Leitungen im Ring) und der Fehlerübergangswiderstand besitzen den größten Einfluss auf die Wirkenergie $E_0$.

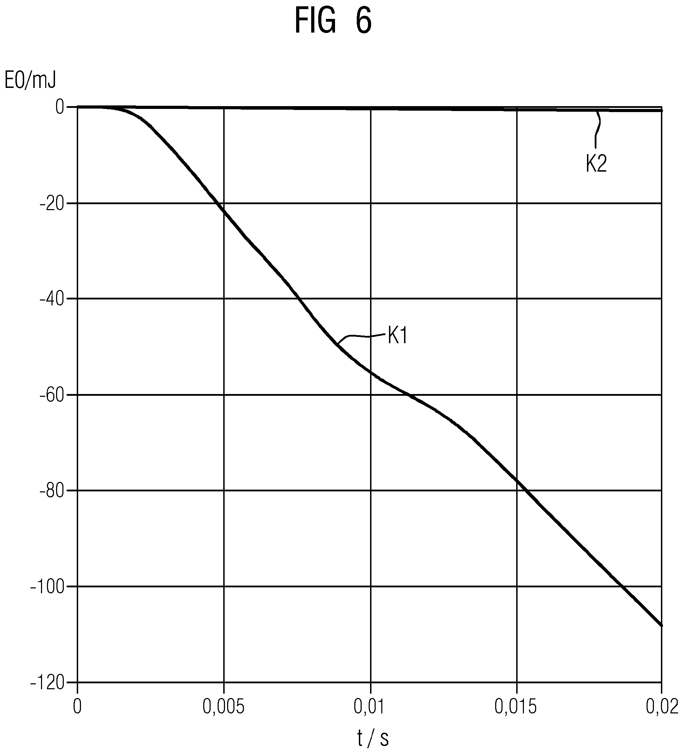

Bei einem Erdschluss mit großem Fehlerübergangswiderstand kann die Wirkenergie $E_0$ um mehrere Größenordnungen kleiner sein als bei einem Erdschluss mit geringem Fehlerübergangswiderstand. Dies ist beispielhaft für zwei Störschriebe in der Figur 6 gezeigt; dabei bezieht sich die Kurve K1 auf einen Erdschluss mit geringem Fehlerübergangswiderstand und die Kurve K2 auf einen Erdschluss mit großen Fehlerübergangswiderstand.

In einem Netz mit Leitungen im Ring kann es zur einfachen bzw. mehrfachen Richtungsumkehr der Wirkenergie $E_0$ kommen.

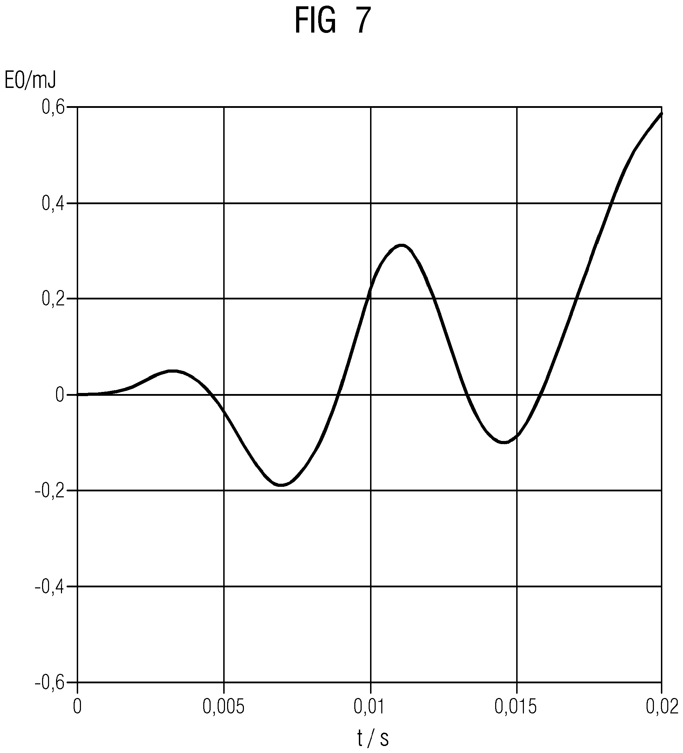

Dies ist beispielhaft für einen Störschrieb in der Figur 7 gezeigt.

Zunächst wird vorzugsweise die Wirkenergie $E_0$ ab dem Erdschlusseintrittszeitpunkt $t_{inc}$ für die Berechnungsdauer $T_{calc} = T = 20$ $ms$ berechnet. Um die Abhängigkeit der Wirkenergie $E_0$ von den Einflussfaktoren zu reduzieren, wird die Wirkenergie $E_0$ auf einen Bezugswert normiert. Es wird dabei ein Bezugswert verwendet, der in jedem Berechnungsschritt einer Berechnung gleich ist, aber sich jede Berechnung ändert. Die Wirkenergie $E_0$ wird auf ihren betragsmäßig größten Wert im Berechnungszeitraum $E_{0\,max}$ bezogen, wie in der folgenden Gleichung dargestellt ist:

$$e_0(t) = \frac{E_0(t)}{E_{0\,max}} = \frac{E_0(t)}{\max(|E_0(t_{inc})|, \dots, |E_0(t_{inc} + T_{calc})|)} \; mit \; t \; \epsilon \; [t_{inc}, t_{inc} + T_{calc}]$$

Der Wertebereich der relativen Wirkenergie $e_0$ wird so auf **-1 $p.u.$** bis **1 $p.u.$** beschränkt.

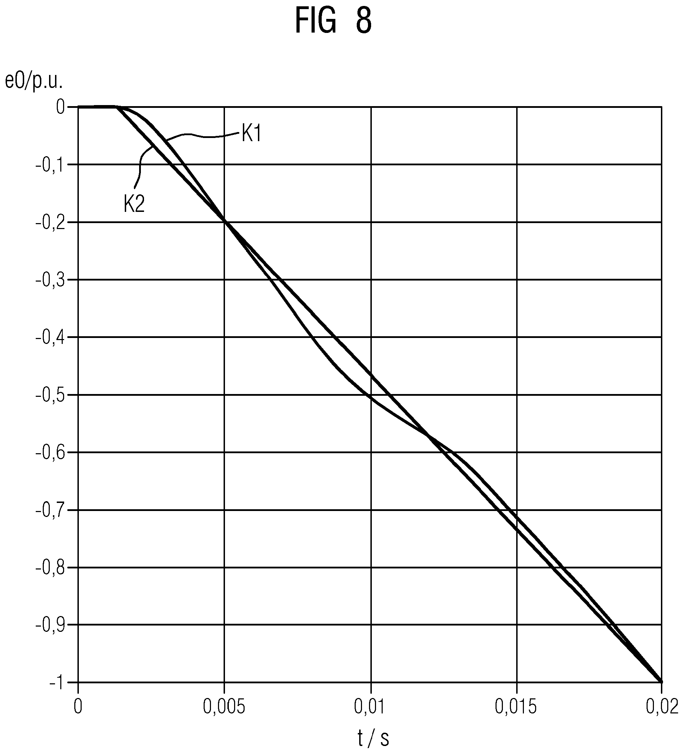

Die normierte Wirkenergie $e_0$ ist für die zwei Störschriebe mit geringem und großem Fehlerübergangswiderstand in der Figur 8 gezeigt; dabei bezieht sich die Kurve K1 wieder auf einen Erdschluss mit geringem Fehlerübergangswiderstand und die Kurve K2 wieder auf einen Erdschluss mit großen Fehlerübergangswiderstand.

Bewertung 30:

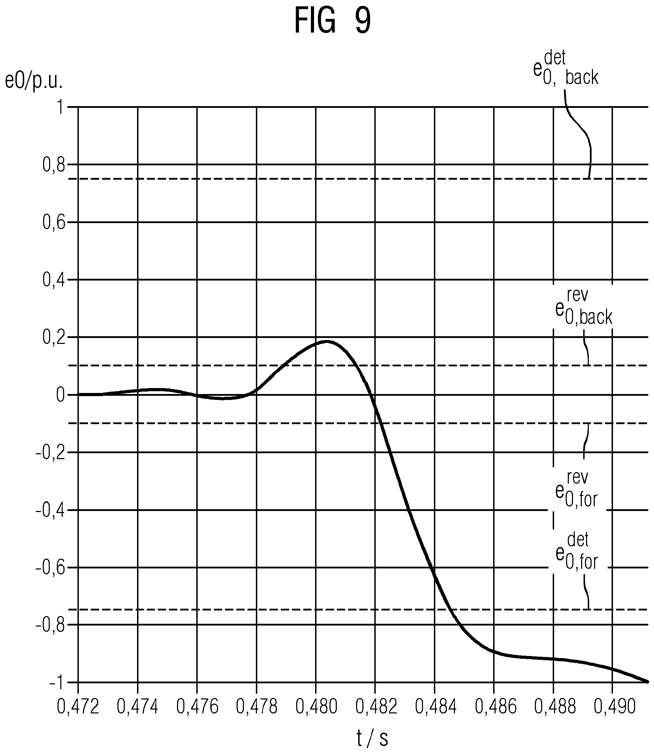

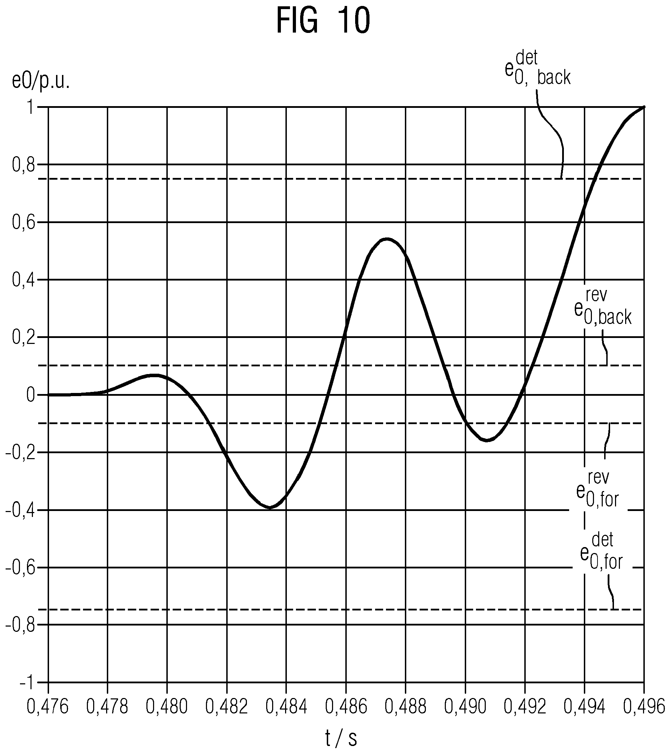

Die im vorherigen Abschnitt eingeführte normierte Wirkenergie $e_0$ ermöglicht die Bewertung der Wirkenergie $E_0$ unabhängig von ihrer absoluten Größe. Falls keine Richtungsumkehr der Wirkenergie $E_0$ auftritt, erreicht die normierte Wirkenergie $e_0$ nach der Berechnungsdauer $T_{calc}$ für einen Erdschluss in Vorwärtsrichtung den Wert **-1 $p.u.$** und für einen Erdschluss in Rückwärtsrichtung den Wert **1 $p.u.$**. Zur Bewertung des Verlaufs der relativen Wirkenergie $e_0$ werden zwei Schwellenwertpaare verwendet, wie in den Figuren 9 und 10 für zwei Störschriebe gezeigt ist.

Zur Bewertung, ob eine Richtungsumkehr vorliegt, werden die beiden Schwellenwerte $e_{0\,for}^{rev} = -0,1\,p.u.$ und $e_{0\,back}^{rev} = 0,1\,p.u.$ ("rev" für englisch "reversal") verwendet. Die Entscheidung, ob ein Erdschluss in Vorwärts- oder Rückwärtsrichtung liegt, wird anhand der Schwellenwerte $e_{0\,for}^{det} = -0,75\,p.u.$ und $e_{0\,back}^{det} = 0,75\,p.u.$ ("det" für englisch "determination") getroffen.

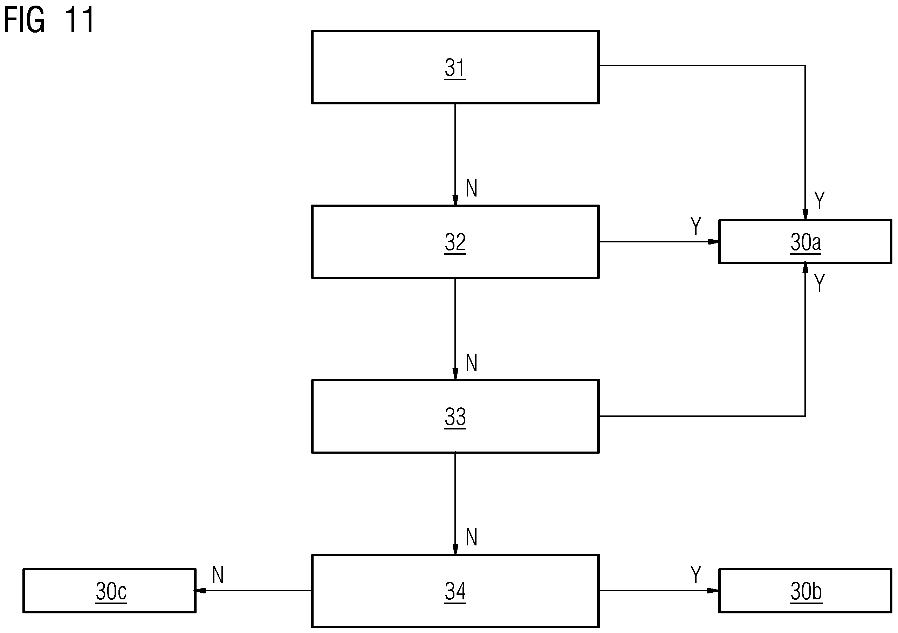

Die Entscheidungslogik zur Bewertung des zeitlichen Verlaufs der relativen Wirkenergie $e_0$ ist in der Figur 11 dargestellt.

Falls beide Schwellenwerte $e_{0\,for}^{rev}$ und $e_{0\,back}^{rev}$ zur Bewertung der Richtungsumkehr mindestens einmal über- und unterschritten werden, wird der Richtungsentscheid 30a "Unbekannt" getroffen (siehe Pfad Y von Schritt 31 aus). Der Richtungsentscheid 30a "Unbekannt" wird weiterhin getroffen, falls beide Schwellenwerte $e_{0\,for}^{det}$ und $e_{0\,back}^{det}$ mindestens einmal über- oder unterschritten werden (siehe Pfad Y von Schritt 32 aus).

Ist dies nicht der Fall, wird der Richtungsentscheid vorzugsweise nach der Berechnungsdauer $T_{calc} = T = 20$ $ms$ getroffen. Liegt die normierte Wirkenergie $e_0$ zwischen den beiden Schwellenwerten $e_{0\,for}^{det}$ und $e_{0\,back}^{det}$, wird der Richtungsentscheid 30a "Unbekannt" getroffen (siehe Pfad Y von Schritt 33 aus).

Ist die normierte Wirkenergie $e_0$ kleiner als der Schwellenwert $e_{0\,for}^{det}$, wird der Richtungsentscheid 30b "Vorwärts" getroffen (siehe Pfad Y von Schritt 34 aus).

Ist die normierte Wirkenergie $e_0$ größer als der Schwellenwert $e_{0\,back}^{det}$, wird der Richtungsentscheid 30c "Rückwärts" getroffen (siehe Pfad N von Schritt 34 aus).

Für die in den Figuren 9 und 10 gezeigten Störschriebe wird der oben beispielhaft beschriebenen Entscheidungslogik folgend für den Störschrieb in Figur 9 der Richtungsentscheid 30b "Vorwärts" und für den Störschrieb in Figur 10 der Richtungsentscheid 30a "Unbekannt" getroffen.

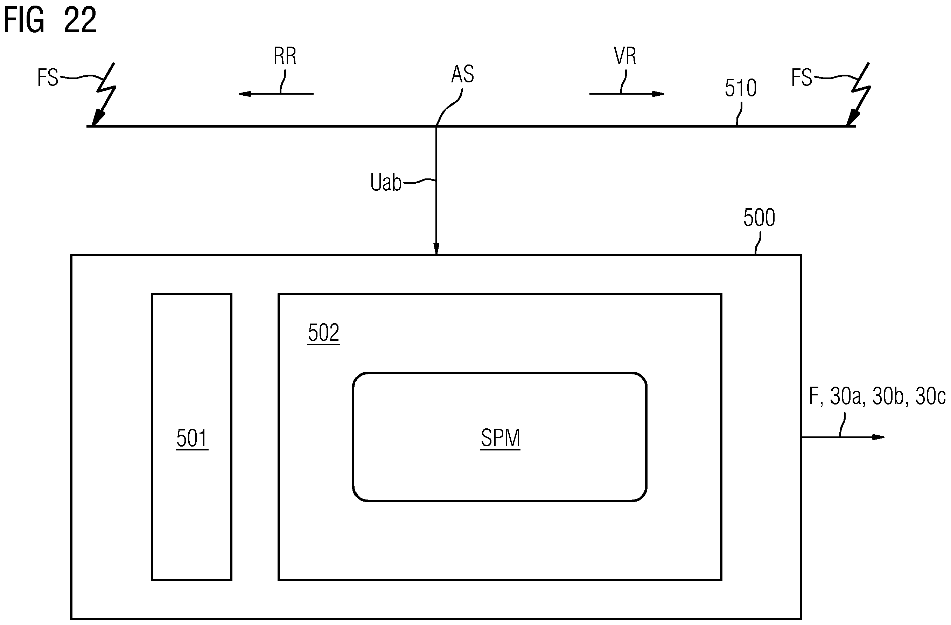

Der Richtungsentscheid 30a "Unbekannt" bildet ein Fehlersignal F (siehe Figur 22), das anzeigt, dass die Richtung (Vorwärtsrichtung VR bzw. Rückwärtsrichtung RR) der Fehlerstelle FS - von der Anschlussstelle AS des Schutzgeräts 500 (siehe Figur 22) aus gesehen - nicht festgestellt werden kann.

Das oben beispielhaft beschriebene Verfahren weist eine gute Robustheit gegenüber anderen transienten Ereignissen auf, welche sich auf die Nullsystemspannung $u_0$ auswirken. Kurzschlüsse werden in der Regel nicht als Erdschluss erkannt. Die gute Robustheit insbesondere gegenüber Kurzschlussvorgängen wird bei dem beispielhaft beschriebenen Verfahren durch die Betrachtung der Mitsystemspannung $U_1$ erreicht. Verlässt die Mitsystemspannung $U_1$ eine Periode $T$ nach dem transienten Ereignis ein Toleranzband um den Wert der Mitsystemspannung $U_{1\,op}$ im fehlerfreien Betrieb, so kann es sich nicht um einen Erdschluss handeln.

Darüber hinaus besitzt das oben beispielhaft beschriebene Verfahren eine hohe Sensitivität bei Erdschlüssen mit großem Fehlerübergangswiderstand. Die hohe Sensitivität wird durch die Normierung der absoluten Wirkenergie $E_0$ auf ihren betragsmäßig größten Wert im Berechnungszeitraum erreicht. Falls keine Richtungsumkehr der Wirkenergie $E_0$ vorliegt, erreicht die normierte Wirkenergie $e_0$ nach der Berechnungsdauer für einen Erdschluss in Vorwärtsrichtung den Wert **-1 *p.u.*** und für einen Erdschluss in Rückwärtsrichtung den Wert **1 *p.u.***

Die Festlegung der Schwellenwerte für den Richtungsentscheid ist bei dem oben beispielhaft beschriebenen Verfahren sehr einfach, da die normierte Wirkenergie $e_0$ als zu bewertende Größe nur Werte zwischen **-1 *p.u.*** und **1 *p.u.*** annimmt.

Weiterhin besitzt das oben beispielhaft beschriebene Verfahren für Erdschlüsse in komplexer Netztopologie (Leitungen im Ring bzw. Doppelring) eine große Robustheit, falls eine Richtungsumkehr der relativen Wirkenergie $e_0$ auftritt. Dies wird durch die Verwendung von zwei Schwellenwertpaaren erreicht.

Ein Schwellenwertpaar wird zur Erkennung der Richtungsumkehr der relativen Wirkenergie $e_0$ verwendet. Ein Schwellenwertpaar wird für den Richtungsentscheid verwendet.

Das oben im Zusammenhang mit dem Block "Anregung" 10 beschriebene Verfahren zur Bestimmung des Erdschlusseintrittszeitpunkt $t_{inc}$ beginnt mit der Berechnung, sobald ein transientes Ereignis in der Nullsystemspannung $u_0$ vorliegt. Dies wird mit dem ersten Algorithmus 11 erfasst. Erst anschließend wird in den folgenden zwei Algorithmen 12 und 13 geprüft, ob es sich dabei tatsächlich um einen Erdschluss handelt.

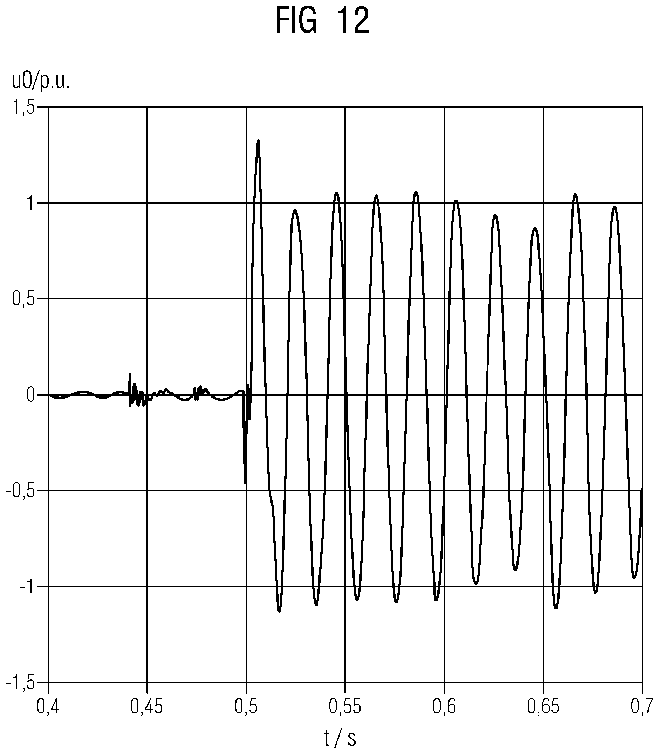

Die beiden Algorithmen 12 und 13 benötigen in der Regel mindestens 20 bis 30 ms, um eine sichere Entscheidung zu treffen. Falls in diesem Zeitraum ein weiteres transientes Ereignis eintritt, wird dieses unter Umständen nicht erfasst. Eine problematische Situation liegt also vor, falls vor dem eigentlichen Erdschlusseintritt eine kurzzeitige Lichtbogenbildung stattfindet. Ein Beispiel für einen solchen Vorgang ist in Figur 12 zu sehen. Die Figur 12 zeigt die Nullsystemspannung $u_0$ bei kurzzeitiger Lichtbogenbildung.

Nachfolgend wird eine Ausführungsvariante zur Bestimmung des Erdschlusseintrittszeitpunkts $t_{inc}$ vorgestellt; die Ausführungsvariante besteht darin, die Schwelle, bei dem die Erdschlusszeitpunktbestimmung gestartet wird, anzuheben, so dass die Schutzeinrichtung bzw. die Bestimmung des Erdschlusseintrittszeitpunkts durch kurzzeitige Lichtbogenbildung nicht angeregt bzw. ausgelöst wird. Der eigentliche Erdschlusseintritt muss dann in Rückwärtsrichtung ermittelt werden.

Die Analyse von Störschrieben hat gezeigt, dass der Zeiger der Nullsystemspannung $U_0$ der Grundschwingung (nicht zu verwechseln mit den Momentanwerten $u_o$ der Nullsystemspannung) maßgeblich von einem Erdschluss, Kurzschluss und Schaltvorgang der eigenen Leitung beeinflusst wird. Kurzzeitige Lichtbogenbildung oder Schaltvorgänge anderer Elemente im Netz führen zu keiner relevanten Veränderung der Nullsystemspannung $U_0$.

Die Unterscheidung, ob ein Erdschluss, Kurzschluss oder Schaltvorgang der eigenen Leitung vorliegt, kann wie beim oben beschriebenen Verfahren anhand der Änderung der Mitsystemspannung $U_1$ erfolgen. Hierfür kann entsprechend der oben beschriebene zweite Algorithmus 12 verwendet werden; diesbezüglich sei auf die obigen Ausführungen im Zusammenhang mit der Figur 4 verwiesen.

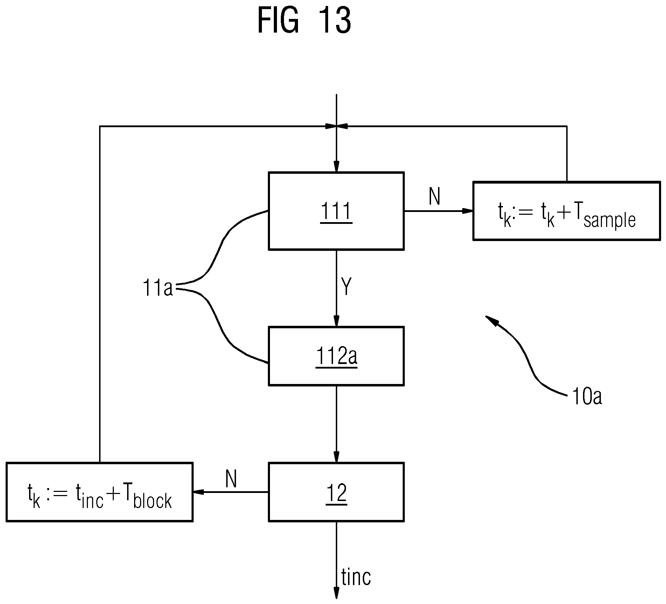

Der Aufbau des nachfolgend näher beschriebenen alternativen Verfahrens 10a zur Bestimmung des Erdschlusseintrittszeitpunkts $t_{inc}$ ist in Figur 13 gezeigt. Das Verfahren, das den Block 10 "Anregung" gemäß Figur 1 bilden kann, umfasst einen ersten (alternativen) Algorithmus 11a, der einen ersten und einen zweiten Teilalgorithmus 111a bzw. 112a aufweist, sowie den oben bereits im Detail beschriebenen zweiten Algorithmus 12.

Der erste Teilalgorithmus 111a des ersten alternativen Algorithmus 11a überprüft, ob zum Abtastzeitpunkt $t_k$ ein Erdschluss, Kurzschluss oder Schaltvorgang der eigenen Leitung vorliegt, der sich auf die Nullsystemspannung $U_0$ auswirkt. Ist dies der Fall, ermittelt der zweite Teilalgorithmus 112a des Algorithmus 11a den Beginn des potentiellen Erdschlusses in Rückwärtsrichtung.

Abschließend bewertet der zweite Teilalgorithmus 12 (siehe Figur 4 sowie die diesbezügliche Figurenbeschreibung), ob es sich bei dem transienten Ereignis um einen Erdschluss handelt oder ob ein Kurzschluss oder Schaltvorgang der eigenen Leitung vorliegt. Die zwei Teilalgorithmen 111a und 112a werden in den folgenden Abschnitten im Detail vorgestellt.

Erster Teilalgorithmus 111a:

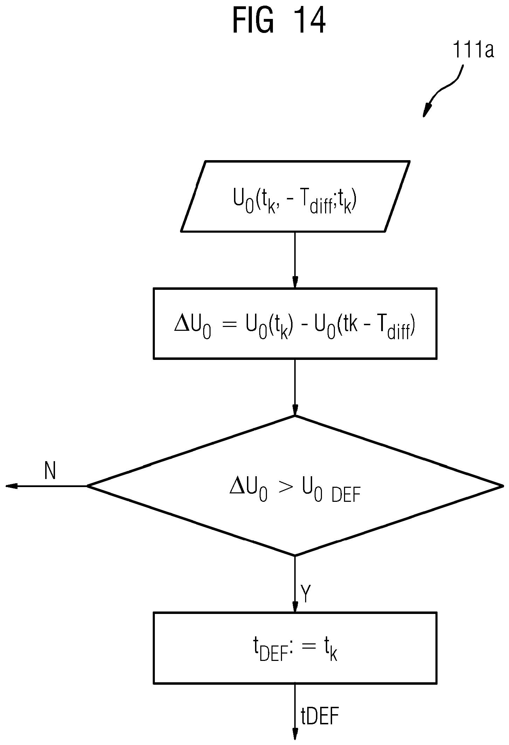

Die Aufgabe des ersten Teilalgorithmus lila besteht darin zu überprüfen, ob zum Abtastzeitpunkt $t_k$ ein Erdschluss, Kurzschluss oder Schaltvorgang der eigenen Leitung vorliegt. Das Flussdiagramm dazu ist in Figur 14 zu sehen.

Die Eingangsgröße des ersten Teilalgorithmus 111a ist der Zeiger der Nullsystemspannung $U_0$ der Grundschwingung. Es wird die Änderung der Nullsystemspannung $U_0$ zum Zeitpunkt $t_k$ gegenüber dem vorherigen Zeitpunkt $t_k - T_{diff}$ berechnet. Die Zeitdauer $T_{diff}$ muss dabei groß genug gewählt werden, so dass auch ein langsamer Anstieg der Nullsystemspannung $U_0$ zu einer gro-ßen Differenz der Nullsystemspannung $\Delta U_0$ führt. In einer bevorzugten Implementierung wird die Zeitdauer $T_{diff}$ = **100 *ms*** gewählt.

Die Differenz der Nullsystemspannung $\Delta U_0$ wird mit dem Schwellenwert $\Delta U_{0\ DEF}$ verglichen. Falls der Schwellenwert überschritten wird, liegt ein Erdschluss, Kurzschluss oder Schaltvorgang der eigenen Leitung vor. Der Schwellenwert wird vorzugsweise als Anteil $\mu_{0\ DEF}$ der Leiter-Erde-Spannung $U_n/\sqrt{3}$ berechnet:

$$\Delta U_{0\ DEF} = \mu_{0\ DEF} \cdot \frac{U_n}{\sqrt{3}} = 0{,}1 \cdot \frac{100\ V}{\sqrt{3}}$$

Der Abtastzeitpunkt $t_k$ wird als Startzeitpunkt $t_{DEF}$ für die Suche des Eintrittszeitpunkts $t_{inc}$ in Rückwärtsrichtung festgelegt.

Zweiter Teilalgorithmus 112a:

Die Aufgabe des zweiten Teilalgorithmus 112a betrifft die Suche nach dem Eintrittszeitpunkt $t_{inc}$ des potentiellen Erdschlusses in Rückwärtsrichtung. Bei dem ermittelten Eintrittszeitpunkt $t_{inc}$ kann es sich auch um den Beginn eines Kurzschlusses oder Schaltvorgangs der eigenen Leitung handeln. Allerdings ist nur die exakte Ermittlung des Beginns eines Erdschlusses relevant.

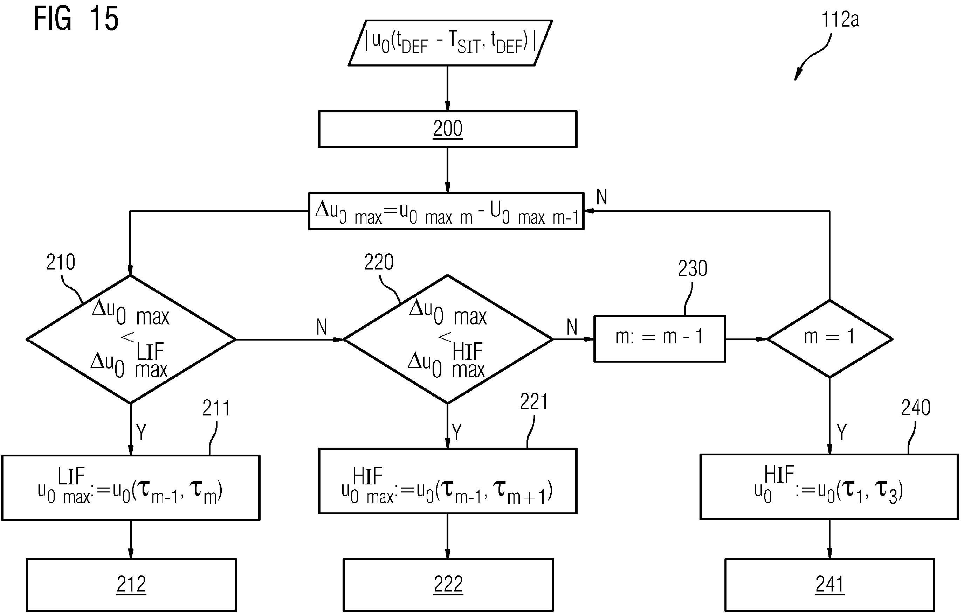

Das Flussdiagramm des zweiten Teilalgorithmus 112a ist in Figur 15 dargestellt. Die Eingangsgröße des Algorithmus ist der Betrag der Momentanwerte der Nullsystemspannung $u_0$ im Intervall $[t_{DEF} - T_{SIT}, t_{DEF}]$.

Die Zeitdauer $T_{SIT}$ legt die Dauer fest, für die ab dem Zeitpunkt $t_{DEF}$ in Rückwärtsrichtung nach dem Eintrittszeitpunkt $t_{inc}$ gesucht wird. In einer bevorzugten Implementierung wird die Zeitdauer zu $T_{SIT}$ = **100 ms** gewählt.

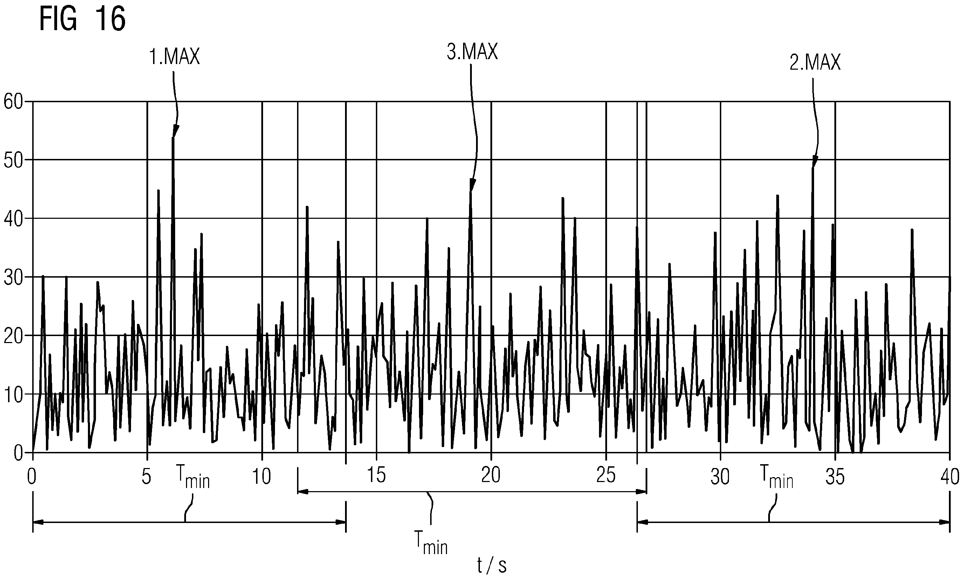

Als erster Schritt werden mit einem Algorithmus 200 das globale Maximum und die lokalen Maxima der Eingangsgröße bestimmt. Dabei wird ein minimaler Abstand $T_{min}$ zwischen den Maxima gefordert. Die Funktionsweise des Algorithmus 200 ist in Figur 16 für ein zufälliges Signal gezeigt.

Der Algorithmus 200 bestimmt zunächst das globale Maximum (1. MAX) des gesamten Signals. Um einen minimalen Abstand $T_{min}$ zu den weiteren Maxima zu gewährleisten, werden alle Abtastwerte innerhalb des Intervalls $\pm T_{min}$ um den Abtastwert des globalen Maximums (1. MAX) für die Suche nach weiteren Maxima ausgeschlossen.

Innerhalb der verbleibenden Abtastwerte des Signals wird erneut das globale Maximum (2. MAX) bestimmt und das Intervall $\pm T_{min}$ um den Abtastwert des globalen Maximums (2. MAX) für die Suche nach weiteren Maxima ausgeschlossen. Dieses Vorgehen wird so lange wiederholt, bis alle Abtastwerte des Signals für die Suche nach weiteren Maxima ausgeschlossen sind.

Der Algorithmus 200 liefert als Ausgangsgröße die Matrix $M$, in der die $n$ Maxima $u_{0\ max i}$ nach aufsteigendem Abtastzeitpunkt $\tau_i$ sortiert sind:

$$M = \begin{pmatrix} \tau_1 & u_{0\ \max 1} \\ \vdots & \vdots \\ \tau_n & u_{0\ \max n} \end{pmatrix}$$

Weiterhin liefert der Algorithmus die Position $m \in [1,...,n]$ des globalen Maximums $u_{0\ \max m}$ in der Matrix $M$.

Im nächsten Schritt 210 wird die Differenz $\Delta u_{0\ max}$ zwischen dem Maximum $m$ und dem vorherigen Maximum $m$ - **1** berechnet. Die Differenz $\Delta u_{0\ max}$ wird mit einem Schwellenwert $\Delta u_{0\ max}^{LIF}$ verglichen.

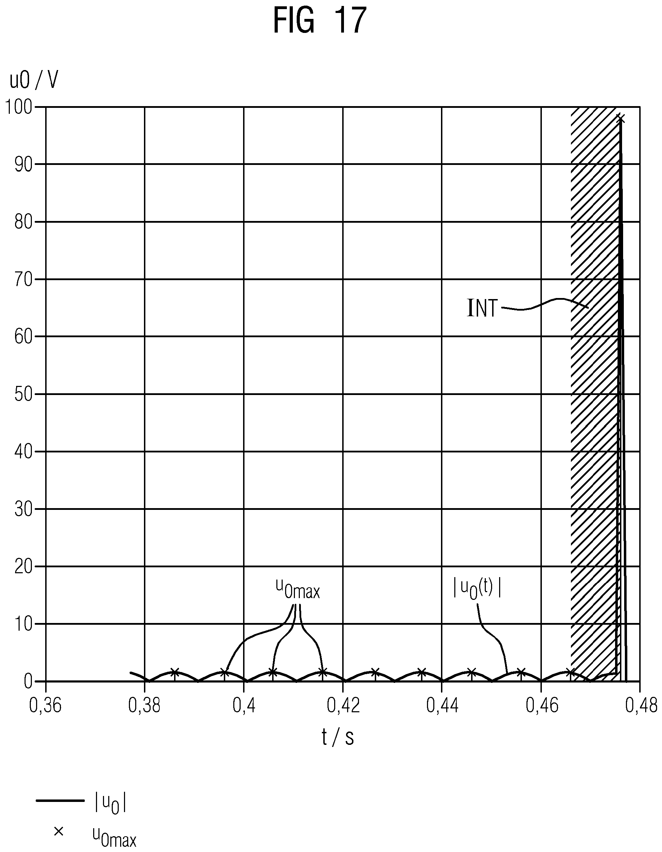

Falls die Differenz größer ist als der Schwellenwert (siehe Ergebnis 211), handelt es sich um einen Erdschluss mit geringem Fehlerübergangswiderstand. Der Erdschlusseintrittszeitpunkt $t_{inc}$ liegt in diesem Fall zwischen den Abtastzeitpunkten $\tau_{m-1}$ und $\tau_m$ der entsprechenden Maxima. Dies ist beispielhaft in Figur 17 zu sehen. Die Figur 17 zeigt den Betrag der Nullsystemspannung $u_0$ und deren Maxima für einen Erdschluss mit geringem Fehlerübergangswiderstand sowie das Intervall INT, in dem der Erdschluss liegt.

Falls die Differenz $\Delta u_{0\ max}$ kleiner als der Schwellenwert $\Delta u_{0\ max}^{LIF}$ für einen Erdschluss mit geringem Fehlerübergangswiderstand ist, wird die Differenz $\Delta u_{0\ max}$ mit einem Schwellenwert $\Delta u_{0\ max}^{HIF}$ für einen Erdschluss mit großem Fehlerübergangswiderstand verglichen (siehe Schritt 220).

Es wird geprüft, ob eine minimale Differenz zwischen dem Maximum $m$ und dem vorherigen Maximum $m$ - **1** vorliegt. Der Schwellenwert $\Delta u_{0\ max}^{HIF}$ ist dynamisch und wird vorzugsweise als Maximum aus einem stationären Wert

$\Delta u_{0\,\max\,stat}^{HIF}$ und einem dynamischen Wert $\Delta u_{0\,\max\,d}^{HIF}$ ermittelt.

Der stationäre Wert $\Delta u_{0\,\max\,stat}^{HIF}$ berechnet sich vorzugsweise als Anteil $\mu_{0\,\max\,stat}^{HIF}$ des Spitzenwerts der Leiter-Erde-Spannung $U_n/\sqrt{3}$ gemäß :

$$\Delta u_{0\,\max\,stat}^{HIF} = \mu_{0\,\max\,stat}^{HIF} \cdot \sqrt{2} \cdot \frac{U_n}{\sqrt{3}} = 0,005 \cdot \frac{100\,V}{\sqrt{3}}$$

Der dynamische Wert $\Delta u_{0\,\max\,dyn}^{HIF}$ berechnet sich vorzugsweise als Anteil $\mu_{0\,\max\,dyn}^{HIF}$ des aktuellen Maximums m gemäß:

$$\Delta u_{0\,\max\,dyn}^{HIF} = \mu_{0\,\max\,dyn}^{HIF} \cdot u_{0\,\max\,m} = 0,05 \cdot u_{0\,\max\,m}$$

Falls $\Delta u_{0\,max}$ größer ist als der Schwellenwert $\Delta u_{0\,max}^{HIF}$ , wird die Laufvariable **m** verringert (siehe Schritt 230). Falls **m** ungleich eins ist, werden die beiden Überprüfungen für das vorherige Maximum durchgeführt.

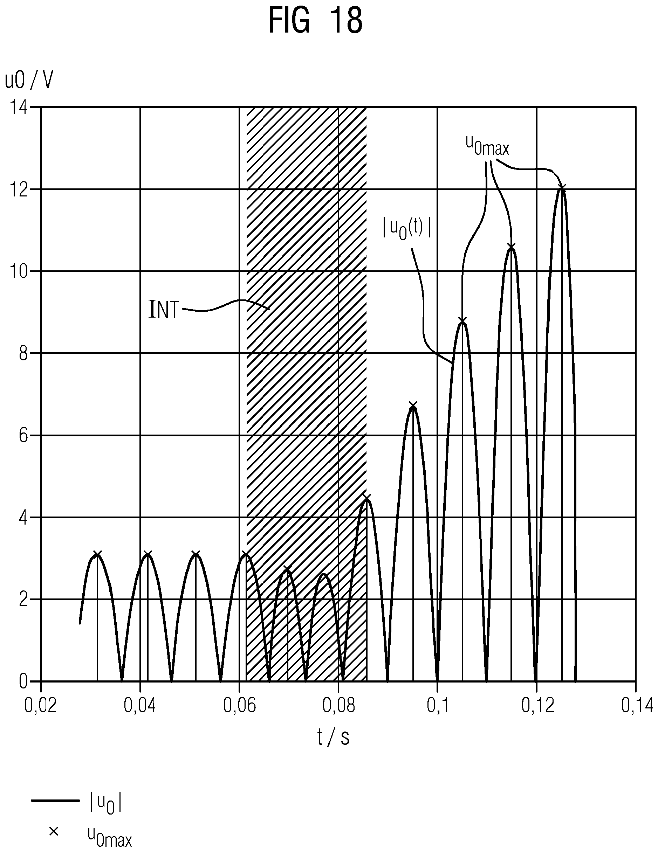

Falls $\Delta u_{0\,max}$ kleiner ist als der Schwellenwert $\Delta u_{0\,max}^{HIF}$, also die minimale Differenz zwischen den Maxima nicht mehr vorhanden ist (siehe Ergebnis 221 in Figur 15), liegt ein Erdschluss mit großem Fehlerübergangswiderstand vor. Der Erdschlusseintrittszeitpunkt **t_{inc}** liegt in diesem Fall zwischen den Abtastzeitpunkten $\tau_{m-1}$ und $\tau_{m+1}$ der entsprechenden Maxima. Dies ist beispielhaft in Figur 18 zu sehen. Die Figur 18 zeigt den Betrag der Nullsystemspannung $u_0$ und deren Maxima für einen Erdschluss mit großem Fehlerübergangswiderstand sowie das Intervall INT, in dem der Erdschluss liegt.

Falls keiner der beiden Schritte 210 oder 220 für die Maxima der Matrix **M** positiv ausfällt, liegt ein Erdschluss mit gro-ßem Fehlerübergangswiderstand vor (siehe Ergebnis 240 in Figur 15). Dieser weist eine kontinuierliche Abnahme der Maxima um mindestens $\Delta u_{0\,max}^{HIF}$ auf.

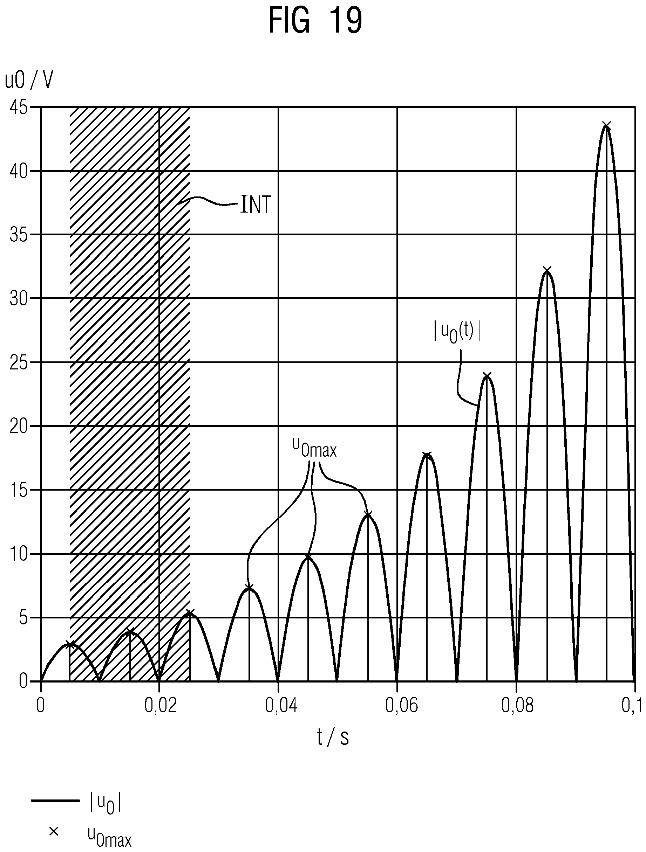

Der Erdschlusseintrittszeitpunkt **t_{inc}** liegt in diesem Fall zwischen dem ersten Maximum zum Abtastzeitpunkt $\tau_1$ und dem dritten Maximum zum Abtastzeitpunkt $\tau_3$. Ein solcher Verlauf der Nullsystemspannung $u_0$ ist in Figur 19 dargestellt. Die Figur 19 zeigt den Betrag der Nullsystemspannung $u_0$ und deren Maxima für einen Erdschluss mit großem Fehlerübergangswiderstand sowie das Intervall INT, in dem der Erdschluss liegt.

In Schritten 212, 222 oder 241 wird in dem im jeweils vorherigen Schritt eingegrenzten Intervall der Nullsystemspannung der exakte Erdschlusseintrittszeitpunkt **t_{inc}** ermittelt. Hierzu wird eine Schätzung der Nullsystemspannung $u_0$ im eingegrenzten Intervall vorzugsweise nach folgender Gleichung vorgenommen:

$$\hat{u}_0(t) = A \cdot \cos(2 \cdot \pi \cdot f \cdot t + \varphi)$$

Für die Amplitude **A** wird der Betrag des ersten Werts der Nullsystemspannung $u_0$ im eingegrenzten Intervall verwendet, da es sich bei diesem Wert in jedem Fall um ein Maximum bzw. Minimum der Nullsystemspannung $u_0$ handelt.

Für die Frequenz **f** kann vereinfachend die Grundfrequenz 50 Hz angesetzt werden. Alternativ kann die im Schutzgerät aktuell bestimmte Netzfrequenz verwendet werden.

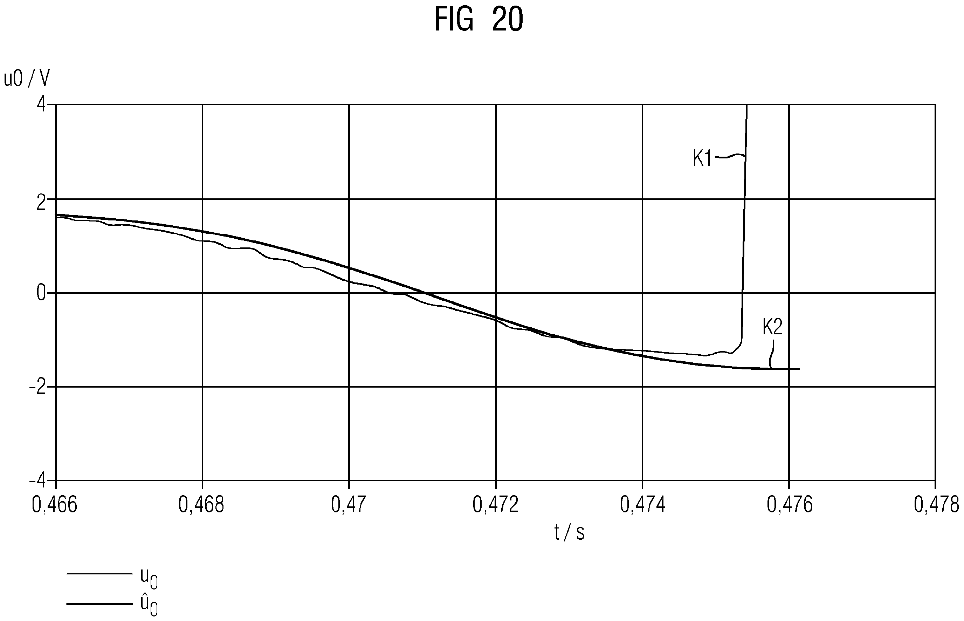

Der Anfangsphasenwinkel $\varphi$ ergibt sich aus dem Vorzeichen des ersten Werts der Nullsystemspannung $u_0$ im eingegrenzten Intervall. Ist der erste Abtastwert positiv, hat $\varphi$ den Wert null. Ist der erste Abtastwert negativ hat $\varphi$ den Wert $\pi$. Original (siehe Kurve K1 in Figur 20) und Schätzung (siehe Kurve K2 in Figur 20) der Nullsystemspannung $u_0$ für einen Erdschluss mit geringem Fehlerübergangswiderstand sind in Figur 20 dargestellt.

Anschließend wird die Differenz $\Delta u_0$ zwischen dem Original der Nullsystemspannung $u_0$ im eingegrenzten Intervall und dessen Schätzung $\hat{u}_0$ berechnet. Dabei wird entsprechend dem vorherigen Schritt unterschieden, ob es sich um einen Erdschluss mit geringem oder großem Fehlerübergangswiderstand handelt. Die Differenz $\Delta u_0$ wird für jeden Abtastschritt mit einem entsprechenden Schwellenwert $\Delta u_0^{LIF}$ bzw. $\Delta u_0^{HIF}$ verglichen.

Die Schwellenwerte berechnen sich vorzugsweise als Anteil $\mu_0^{LIF}$ bzw. $\mu_0^{HIF}$ des Spitzenwerts der Leiter-Erde-Spannung $U_n/\sqrt{3}$ gemäß :

$$\Delta u_0^{LIF} = \mu_0^{LIF} \cdot \sqrt{2} \cdot \frac{U_n}{\sqrt{3}} = 0{,}05 \cdot \sqrt{2} \cdot \frac{100\,V}{\sqrt{3}}$$

$$\Delta u_0^{HIF} = \mu_0^{HIF} \cdot \sqrt{2} \cdot \frac{U_n}{\sqrt{3}} = 0{,}025 \cdot \sqrt{2} \cdot \frac{100\,V}{\sqrt{3}}$$

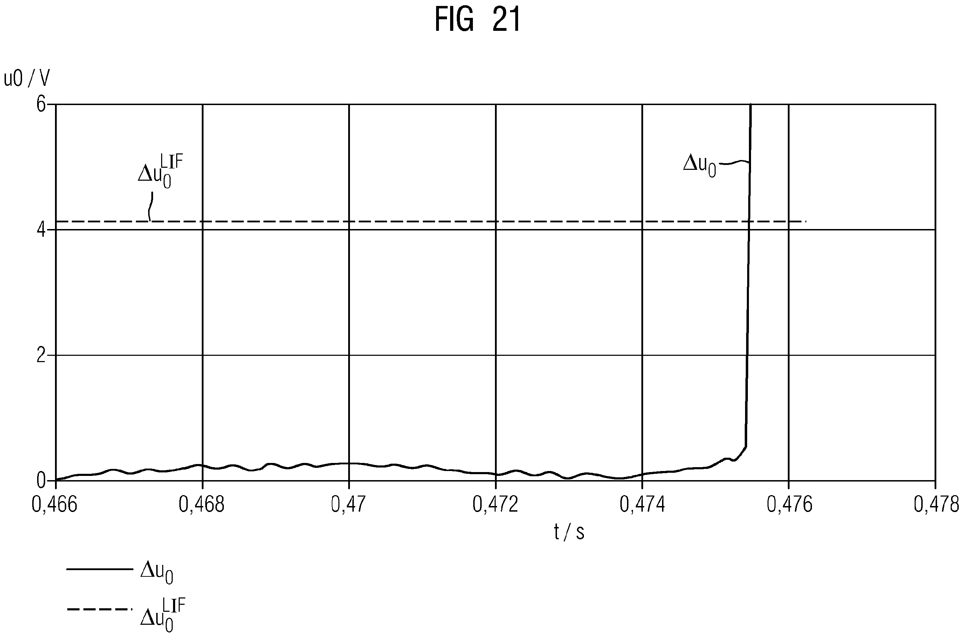

Der Abtastwert, bei dem die Differenz den entsprechenden Schwellenwert überschreitet, ist der Erdschlusseintrittszeitpunkt $t_{inc}$. Die Figur 21 zeigt beispielhaft die Differenz für einen Erdschluss mit geringem Fehlerübergangswiderstand.

Anschließend kann geprüft werden, ob es sich bei dem transienten Ereignis zum Erdschlusseintrittszeitpunkt $t_{inc}$ tatsächlich um einen Erdschluss handelt. Diesbezüglich kann so vorgegangen werden, wie dies oben im Zusammenhang mit der Figur 4 und dem zweiter Algorithmus 12 beschrieben worden ist.

Zusammengefasst wird in dem alternativen Algorithmus 11a zur Bestimmung des Erdschlusseintrittszeitpunkt $t_{inc}$ im Rahmen des ersten Teilalgorithmus 111a anhand einer Nullsystemauslösebedingung geprüft, ob ein Erdschluss vorliegen kann und der Zeitpunkt der Erfüllung als Startzeitpunkt für die Suche des eigentlichen Eintrittszeitpunkts verwendet wird. In dem zweiten Teilalgorithmus 112a erfolgt die Suche des eigentlichen Eintrittszeitpunkts in Rückwärtsrichtung. Hierbei werden zunächst anhand von Werten der Nullsystemspannung die lokalen Maxima und das globale Maximum des Betrags der Nullsystemspannung bestimmt. Anhand dieser Maxima wird der Zeitraum des potentiellen Erdschlusseintritts eingegrenzt. Danach wird über eine Schätzung der Nullsystemspannung in diesem begrenzten Zeitraum und deren Differenz mit den eigentlichen Werten der exakte Eintrittszeitpunkt ermittelt.

Anschließend wird vorzugsweise geprüft, ob die Mitsystemauslösebedingung (siehe zweiter Algorithmus 12) erfüllt ist.

Die Figur 22 zeigt ein Ausführungsbeispiel für eine erfindungsgemäße Einrichtung 500, die zum Erzeugen einer erdschlussbezogenen Information an einer Anschlussstelle AS an eine elektrische Leitung 510 angeschlossen ist.

Die Einrichtung 500 weist eine Recheneinrichtung 501 und einen Speicher 502 auf. In dem Speicher 502 ist ein Steuerprogrammmodul SPM abgespeichert, das bei Ausführung durch die Recheneinrichtung 501 eines oder mehrere der oben beschriebenen Verfahren durchführt.

Das Steuerprogrammmodul SPM wird beispielsweise anhand anliegender Spannungsabtastwerte $U_{ab}$ bei Vorliegen einer den Eintrittszeitpunkt eines Erdschlusses angebenden Zeitpunktangabe die Wirkenergie im Nullsystem ab diesem Eintrittszeitpunkt für eine vorgegebene Zeitspanne unter Bildung von Wirkenergiewerten beobachten, die Wirkenergiewerte normieren, die normierten Wirkenergiewerte mit zumindest einem Schwellenwertpaar vergleichen, das einen oberen Schwellenwert und einen unteren Schwellenwert umfasst, auf einen Erdschluss an einer Fehlerstelle FS, die - von der Anschlussstelle AS aus gesehen - in einer vorgegebenen Richtung (z. B. Vorwärtsrichtung) liegt, schließen, wenn die normierten Wirkenergiewerte nach Ablauf der vorgegebene Zeitspanne den unteren Schwellenwert unterschritten haben, und auf einen Erdschluss an einer Fehlerstelle FS, die von der Anschlussstelle AS aus gesehen in einer zu der vorgegebenen Richtung entgegengesetzten Richtung (z. B. Rückwärtsrichtung) liegt, schließen, wenn die normierten Wirkenergiewerte nach Ablauf der vorgegebene Zeitspanne den oberen Schwellenwert überschritten haben. Falls die Richtung der Fehlerstelle FS - von der Anschlussstelle AS des Schutzgeräts 500 aus gesehen - nicht festgestellt werden kann, wird vorzugsweise ein Fehlersignal F erzeugt, beispielsweise in Form eines Richtungsentscheids 30a "Unbekannt" (siehe oben).

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.


**Patentansprüche**

1. Verfahren zum Erzeugen einer erdschlussbezogenen Information mit einer an einer Anschlussstelle (AS) an einer elektrischen Leitung (510) angeschlossenen Einrichtung (500), wobei

    - bei Vorliegen einer den Eintrittszeitpunkt eines Erdschlusses angebenden Zeitpunktangabe die Wirkenergie im Nullsystem ab diesem Eintrittszeitpunkt für eine vorgegebene Zeitspanne unter Bildung von Wirkenergiewerten beobachtet wird,

**dadurch gekennzeichnet, dass**

- die Wirkenergiewerte normiert werden, indem von den ab dem Eintrittszeitpunkt bis zum Ende der vorgegebenen Zeitspanne erzeugten Wirkenergiewerten der betragsmäßig größte Wirkenergiewert ermittelt wird und die Wirkenergiewerte durch Division durch den Betrag dieses größten Wirkenergiewerts normiert werden,
- die normierten Wirkenergiewerte mit zumindest einem Schwellenwertpaar verglichen werden, das einen oberen Schwellenwert und einen unteren Schwellenwert umfasst,
- auf einen Erdschluss an einer Fehlerstelle (FS), die - von der Anschlussstelle (AS) aus gesehen - in einer vorgegebenen Richtung liegt, geschlossen wird, wenn die normierten Wirkenergiewerte nach Ablauf der vorgegebenen Zeitspanne den unteren Schwellenwert unterschritten haben, und
- auf einen Erdschluss an einer Fehlerstelle (FS), die von der Anschlussstelle (AS) aus gesehen in einer zu der vorgegebenen Richtung entgegengesetzten Richtung liegt, geschlossen wird, wenn die normierten Wirkenergiewerte nach Ablauf der vorgegebenen Zeitspanne den oberen Schwellenwert überschritten haben.

2. Verfahren nach Anspruch 1,
**dadurch gekennzeichnet, dass**
auf die Lage der Fehlerstelle (FS) nur geschlossen wird, sofern kein Fehlersignal (FS, 30a) vorliegt, das anzeigt, dass die Richtung der Fehlerstelle (FS) - von der Anschlussstelle (AS) aus gesehen - nicht festgestellt werden kann.

3. Verfahren nach Anspruch 2,
**dadurch gekennzeichnet, dass**
das Fehlersignal (FS, 30a) erzeugt wird, wenn der normierte Wirkenergiewert nach Ablauf der vorgegebenen Zeitspanne zwischen dem oberen und unteren Schwellenwert liegt.

4. Verfahren nach Anspruch 2,
**dadurch gekennzeichnet, dass**
das Fehlersignal (FS, 30a) erzeugt wird, wenn die normierten Wirkenergiewerte innerhalb der vorgegebenen Zeitspanne sowohl den oberen Schwellenwert überschritten als auch den unteren Schwellenwert unterschritten haben.

5. Verfahren nach einem der voranstehenden Ansprüche,
**dadurch gekennzeichnet, dass**

- die normierten Wirkenergiewerte mit zumindest einem Hilfsschwellenwertpaar verglichen werden, das durch einen oberen Hilfsschwellenwert und einen unteren Hilfsschwellenwert gebildet wird, und
- ein Richtungsumkehrsignal erzeugt wird, das anzeigt, dass die Wirkenergie im Zeitraum zwischen dem Eintrittszeitpunkt und dem Ablauf der vorgegebenen Zeitspanne die Richtung geändert hat, wenn die normierten Wirkenergiewerte innerhalb der vorgegebenen Zeitspanne sowohl den oberen Hilfsschwellenwert über- und unterschritten als auch den unteren Hilfsschwellenwert über- und unterschritten haben.

6. Verfahren nach Anspruch 5,
**dadurch gekennzeichnet, dass**
das Richtungsumkehrsignal ein Fehlersignal (FS, 30a) bildet, das anzeigt, dass die Richtung der Fehlerstelle (FS) - von der Anschlussstelle (AS) aus gesehen - nicht festgestellt werden kann.

7. Verfahren nach einem der voranstehenden Ansprüche,
**dadurch gekennzeichnet, dass**
der obere Schwellenwert und der untere Schwellenwert betragsmäßig gleich groß sind, aber unterschiedliche Vorzeichen aufweisen.

8. Verfahren nach einem der voranstehenden Ansprüche,
**dadurch gekennzeichnet, dass**
der obere Schwellenwert und der untere Schwellenwert betragsmäßig zwischen 0,7 und 0,9 liegen.

9. Verfahren nach einem der voranstehenden Ansprüche 5 bis 8, **dadurch gekennzeichnet, dass**
der obere Hilfsschwellenwert und der untere Hilfsschwellenwert betragsmäßig gleich groß sind, aber unterschiedliche Vorzeichen aufweisen.

10. Verfahren nach einem der voranstehenden Ansprüche 5 bis 9,
**dadurch gekennzeichnet, dass**
der obere Hilfsschwellenwert und der untere Hilfsschwellenwert betragsmäßig zwischen 0,05 und 0,25 liegen.

11. Verfahren nach einem der voranstehenden Ansprüche,
**dadurch gekennzeichnet, dass**
die vorgegebene Zeitdauer zwischen 0,5 und 2 Netzperioden, vorzugsweise eine Netzperiode, der an der Anschlussleitung anliegenden Netzfrequenz beträgt.

12. Verfahren nach einem der voranstehenden Ansprüche,
**dadurch gekennzeichnet, dass**
auf das Vorliegen eines Erdschlusses geschlossen wird und der Eintrittszeitpunkt des Erdschlusses bestimmt wird, wenn zumindest die Mitsystemspannung zumindest eine vorgegebene Mitsystemmauslösebedingung erfüllt und/oder die Nullsystemspannung zumindest eine vorgegebene Nullsystemauslösebedingung erfüllt.

13. Verfahren nach einem der voranstehenden Ansprüche,
**dadurch gekennzeichnet, dass**
auf das Vorliegen eines Erdschlusses geschlossen wird und der Eintrittszeitpunkt des Erdschlusses bestimmt wird, wenn sowohl die Nullsystemspannung zumindest eine vorgegebene Nullsystemauslösebedingung erfüllt als auch die Mitsystemspannung zumindest eine vorgegebene Mitsystemmauslösebedingung erfüllt.

14. Einrichtung (500), insbesondere Schutzgerät, zum Erzeugen einer erdschlussbezogenen Information, wobei die Einrichtung (500) geeignet ist an einer Anschlussstelle (AS) an eine elektrische Leitung (510) angeschlossenen zu werden ,
**dadurch gekennzeichnet, dass**
die Einrichtung (500) derart ausgestaltet ist, dass sie im Betrieb zumindest ein Verfahren nach einem der voranstehenden Ansprüche ausführt.

**Claims**

1. Method for generating earth-fault-related information using a device (500) connected to an electrical line (510) at a connection point (AS), wherein

    - the presence of a time statement indicating the time of onset of an earth fault results in the active energy in the zero phase-sequence system being observed for a predefined period of time from this time of onset to form active energy values,

    **characterized in that**

    - the active energy values are normalized by ascertaining the largest active energy value, in absolute-value terms, from the active energy values generated from the time of onset to the end of the predefined period of time and normalizing the active energy values by dividing them by the absolute value of this largest active energy value,
    - the normalization energy values are compared with at least one pair of threshold values that comprises an upper threshold value and a lower threshold value,
    - an earth fault at a fault location (FS) that is in a predefined direction - as seen from the connection point (AS) - is inferred if the normalized active energy values have fallen short of the lower threshold value after the predefined period of time has elapsed, and
    - an earth fault at a fault location (FS) that is in an opposite direction from the predefined direction, as seen from the connection point (AS), is inferred if the normalized active energy values have fallen short of the upper threshold value after the predefined period of time has elapsed.

2. Method according to Claim 1,
**characterized in that**
the position of the fault location (FS) is inferred only if there is no error signal (FS, 30a) indicating that the direction of the fault location (FS) - as seen from the connection point (AS) - cannot be established.

3. Method according to Claim 2,
   **characterized in that**
   the error signal (FS, 30a) is generated if the normalized active energy value is between the upper and lower threshold values after the predefined period of time has elapsed.

4. Method according to Claim 2,
   **characterized in that**
   the error signal (FS, 30a) is generated if the normalized active energy values have exceeded the upper threshold value and also have fallen short of the lower threshold value within the predefined period of time.

5. Method according to one of the preceding claims,
   **characterized in that**

   - the normalized active energy values are compared with at least one pair of auxiliary threshold values that is formed by an upper auxiliary threshold value and a lower auxiliary threshold value, and
   - a direction reversal signal indicating that the active energy has changed direction in the period between the time of onset and the elapsing of the predefined period of time is generated if the normalized active energy values have exceeded and fallen short of the upper auxiliary threshold value and also have exceeded and fallen short of the lower auxiliary threshold value within the predefined period of time.

6. Method according to Claim 5,
   **characterized in that**
   the direction reversal signal forms an error signal (FS, 30a) indicating that the direction of the fault location (FS) - as seen from the connection point (AS) - cannot be established.

7. Method according to one of the preceding claims,
   **characterized in that**
   the upper threshold value and the lower threshold value are of equal magnitude in absolute-value terms but have different arithmetic signs.

8. Method according to one of the preceding claims,
   **characterized in that**
   the upper threshold value and the lower threshold value are between 0.7 and 0.9 in absolute-value terms.

9. Method according to one of preceding Claims 5 to 8,
   **characterized in that**
   the upper auxiliary threshold value and the lower auxiliary threshold value are of equal magnitude in absolute-value terms but have different arithmetic signs.

10. Method according to one of preceding Claims 5 to 9,
    **characterized in that**
    the upper auxiliary threshold value and the lower auxiliary threshold value are between 0.05 and 0.25 in absolute-value terms.

11. Method according to one of the preceding claims,
    **characterized in that**
    the predefined length of time is between 0.5 and 2 system periods, preferably one system period, of the system frequency present on the connecting lead.

12. Method according to one of the preceding claims,
    **characterized in that**
    the presence of an earth fault is inferred and the time of onset of the earth fault is determined if at least the positive-sequence voltage meets at least one predefined positive-sequence trigger condition and/or the zero-sequence voltage meets at least one predefined zero-sequence trigger condition.

13. Method according to one of the preceding claims,

**characterized in that**
the presence of an earth fault is inferred and the time of onset of the earth fault is determined if the zero-sequence voltage meets at least one predefined zero-sequence trigger condition and also the positive-sequence voltage meets at least one predefined positive-sequence trigger condition.

14. Device (500), in particular protective device, for generating earth-fault-related information, the device (500) being suitable for being connected to an electrical line (510) at a connection point (AS),
**characterized in that**
the device (500) is configured such that, during operation, it carries out at least one method according to one of the preceding claims.


**Revendications**

1. Procédé de production d'une information relative à la mise à la terre comprenant un dispositif (500) connecté en un point (AS) de connexion à une ligne (510) électrique,
dans lequel

- en présence d'une indication instantanée indiquant l'instant d'apparition d'une mise à la terre, on observe, avec formation de valeurs d'énergie actives, l'énergie active dans le système monopolaire à partir de cet instant d'apparition pendant un laps de temps donné à l'avance,

**caractérisé en ce que**

- on norme les valeurs d'énergie active en déterminant la valeur d'énergie active la plus grande en valeur absolue à partir des valeurs d'énergie actives produites à partir de l'instant d'apparition jusqu'à la fin du laps de temps donné à l'avance et on norme les valeurs d'énergie actives en divisant par la valeur absolue de cette valeur d'énergie active la plus grande.
- on compare les valeurs d'énergie active normées à au moins une paire de valeurs de seuil, qui comprend une valeur de seuil supérieure et une valeur de seuil inférieure,
- on décide d'une mise à la terre en un point (FS) défectueux, qui - considéré depuis le point (AS) de connexion - se trouve dans un sens donné à l'avance, si les valeurs d'énergie actives normées sont passées en dessous de la valeur de seuil inférieure après l'expiration du laps de temps donné à l'avance, et
- on décide d'une mise à la terre en un point (FS) défectueux, qui considéré à partir du point (AS) de connexion se trouve dans un sens contraire au sens donné à l'avance, si les valeurs d'énergie actives normées ont dépassé la valeur de seuil supérieure après l'expiration du laps de temps donné à l'avance.

2. Procédé suivant la revendication 1,
**caractérisé en ce que**
on ne décide de la position du point (FS) défectueux que dans la mesure où il n'y a pas de signal (FS, 30a) de défaut, qui indique qu'il n'a pas pu être constaté le sens du point (FS) défectueux - considéré à partir du point (AS) de connexion.

3. Procédé suivant la revendication 2,
**caractérisé en ce que**
on produit le signal (FS, 30a) d'erreur si la valeur d'énergie active normée se trouve après l'expiration du laps de temps donné à l'avance, entre la valeur de seuil supérieure et la valeur de seuil inférieure.

4. Procédé suivant la revendication 2,
**caractérisé en ce que**
on produit le signal (FS, 30a) d'erreur si les valeurs d'énergie actives normées dans le laps de temps donné à l'avance tant sont supérieures à la valeur de seuil supérieure qu'également inférieures à la valeur de seuil inférieure.

5. Procédé suivant l'une des revendications précédentes,
**caractérisé en ce que**

- on compare les valeurs d'énergie actives normées à au moins une paire de valeurs de seuil auxiliaires, que l'on forme par une valeur de seuil auxiliaire supérieure et par une valeur de seuil auxiliaire inférieure, et

- on produit un signal d'inversion de sens, qui indique que l'énergie acquise a changé de sens dans l'espace de temps compris entre l'instant d'apparition et l'expiration du laps de temps donné à l'avance, si les valeurs d'énergie actives normées sont, dans le laps de temps donné à l'avance, tant passées au-dessus et passées en dessous de la valeur de seuil auxiliaire supérieure qu'également passé au-dessus et en dessous de la valeur de seuil auxiliaire inférieure.

6. Procédé suivant la revendication 5,
   **caractérisé en ce que**
   le signal d'inversion de sens forme un signal (FS, 30a) de défaut, qui indique que le sens du point (FS) défectueux - considéré à partir du point (AS) de connexion - ne peut pas être constaté.

7. Procédé suivant l'une des revendications précédentes,
   **caractérisé en ce que**
   la valeur de seuil supérieure et la valeur de seuil inférieure sont de même grandeur en valeur absolue, mais ont des signes différents.

8. Procédé suivant l'une des revendications précédentes,
   **caractérisé en ce que**
   la valeur de seuil supérieure et la valeur de seuil inférieure sont en valeur absolue comprise entre 0,7 et 0,9.

9. Procédé suivant l'une des revendications 5 à 8,
   **caractérisé en ce que**
   la valeur de seuil auxiliaire supérieure et la valeur de seuil auxiliaire inférieure sont de même grandeur en valeur absolue, mais on des signes différents.

10. Procédé suivant l'une des revendications 5 à 9 précédentes,
    **caractérisé en ce que**
    la valeur de seuil auxiliaire supérieure et la valeur de seuil auxiliaire inférieure sont comprises en valeur absolue entre 0,05 et 0,25.

11. Procédé suivant l'une des revendications précédentes,
    **caractérisé en ce que**
    la durée donnée à l'avance est comprise entre 0,5 et 2 périodes du réseau, en étant de préférence égale à une période du réseau, qui représente une fréquence du réseau s'appliquant à la ligne de connexion.

12. Procédé suivant l'une des revendications précédentes,
    **caractérisé en ce que**
    on décide de la présence d'une mise à la terre et on détermine l'instant d'apparition de la mise à la terre, si au moins la tension du système direct satisfait au moins une condition donnée à l'avance de déclenchement du système direct et/ou si la tension du système homopolaire satisfait au moins une condition donnée à l'avance de déclenchement du système homopolaire.

13. Procédé suivant l'une des revendications précédentes,
    **caractérisé en ce que**
    l'on décide de la présence d'une mise à la terre et on détermine l'instant d'apparition de la mise à la terre, si tant la tension du système homopolaire satisfait au moins une condition donnée à l'avance de déclenchement du système homopolaire qu'également la tension du système direct satisfait au moins une condition donnée à l'avance de déclenchement du système direct.

14. Dispositif (500), en particulier appareil de protection, de production d'une information relative à une mise à la terre, dans lequel le dispositif (500) est propre à être connecté en un point (AS) de connexion à une ligne (510) électrique,
    **caractérisé en ce que**
    le dispositif (500) est conformé de manière à effectuer en fonctionnement au moins un procédé suivant l'une des revendications précédentes.

## FIG 1

$$\boxed{\underline{10}} \xrightarrow{\;t_{inc}\;} \boxed{\underline{20}} \xrightarrow{\;e_0\;} \boxed{\underline{30}}$$

## FIG 2

FIG 3

11

$$u_0(t_k)$$

$$|u_0(t_k)| > u_{0,stat}$$
$$\&$$
$$|u_0(t_k)| > u_{0,dyn}$$

N

Y

FIG 4

12

$$U_1(t_k+T)$$

$$U_{1,uv} < U_1(t_k+T) < U_{1,ov}$$

N

Y

# FIG 5

13

$$U_0(t_k, t_k + T)$$

131

Y1 ← ⟨ SAMPE > 20% ⟩

N1

Y2 ← ⟨ $A > A_{LIF}$ & $\alpha < \alpha_{LIF}$ ⟩

N2

Y3 ← ⟨ $A > A_{HIF}$ & $\alpha < \alpha_{HIF}$ ⟩

N3

# FIG 6

# FIG 7

# FIG 8

# FIG 9

# FIG 10

FIG 11

31

32

33

34

30a

30b

30c

# FIG 12

# FIG 13

11a

111

N → $t_k := t_k + T_{sample}$

Y

112a

10a

$t_k := t_{inc} + T_{block}$ ← N ← 12

tinc

# FIG 14

111a

$$U_0(t_k, - T_{diff};t_k)$$

$$\Delta U_0 = U_0(t_k) - U_0(tk - T_{diff})$$

$$\Delta U_0 > U_{0\ DEF}$$

N

Y

$$t_{DEF} := t_k$$

tDEF

FIG 15

EP 3 832 823 B1

FIG 16

2.MAX

3.MAX

1.MAX

$T_{min}$

$T_{min}$

$T_{min}$

t / s

60
50
40
30
20
10
0

0   5   10   15   20   25   30   35   40

# FIG 17

# FIG 18

# FIG 19

## FIG 20

# FIG 21

EP 3 832 823 B1

# FIG 22

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2756571 A